# EUROPEAN PATENT APPLICATION

(11) **EP 2 725 788 A1**
(43) Date of publication of application: **30.04.2014**
(21) Application number: 12802655.6
(22) Date of filing: 21.06.2012
(51) Int. Cl.: H04N 7/173, H04H 60/31, H04N 5/765, H04N 5/91, H04N 17/00

(54) **RECEPTION TERMINAL, VIEWING INFORMATION COLLECTION SYSTEM, AND VIEWING INFORMATION COLLECTION METHOD**

(30) Priority: 22.06.2011 JP 2011138708; 12.01.2012 JP 2012004031
(71) Applicant: Mitsubishi Electric Corporation, Tokyo 100-8310 (JP)
(72) Inventor: MATSUBARA, Masami, Tokyo 100-8310 (JP); MAEDA, Shinji, Tokyo 100-8310 (JP); FUKASAWA, Tsukasa, Tokyo 100-8310 (JP); MIURA, Shin, Tokyo 100-8310 (JP)
(74) Representative: Pfenning, Meinig & Partner GbR
(86) International application number: PCT/JP2012/065851
(87) International publication number: WO 2012/176835

(57) **Abstract**

A receiving terminal includes: a content receiving unit 120 for receiving a content; a display state detecting unit 140 for detecting a display state indicating whether the content the content receiving unit 120 receives is displayed on a display device 300 or not; a state detecting unit 111 for identifying an audience event indicating an audience mode of the content by analyzing a distribution mode of the content the content receiving unit 120 receives and a display state of the content the display state detecting unit 140 detects; an audience information creatingunit 112 for generating audience information corresponding to the audience event the state detecting unit 111 identifies; and an audience information transmitting unit 113 for outputting the audience information the audience information creating unit 112 generates.

## Description

### TECHNICAL FIELD

The present invention relates to an audience information collecting system and an audience information collecting method for collecting audience information about a user in a content distribution service.

### BACKGROUND ART

Recently, a variety of services including video content distribution have been provided on a network based on Internet Protocol (IP), and an increasing number of types of services and their providing methods have been developed. A service receiving terminal has not only a function of receiving contents, but also advanced functions such as content recording/playback, supporting of interactive services and handling of various content formats (video, music and text). It is very important for a service provider to measure the consumption of the provided services because consumption has a direct effect on the service provider commercial performance.

Conventionally, as a viewer rating system of an IP multicasting TV by which video contents are transmitted from the server to a receiving terminal via an IP network, there is a system disclosed in Patent Document 1, for example. The Patent Document 1 discloses a configuration for transmitting information about a selected broadcast signal and information about the calculated elapsed time (except for a time shorter than a prescribed time) to a collection server to cause it to collect the viewing information more accurately in spite of frequent changes of the channels viewed.

In addition, Patent Document 2 discloses a configuration which adds/updates bookmark information linked to each user. Corresponding bookmark information is linked to the user by using information about the user recognized through a camera and information of the program that is being played back. This configuration recognizes each user and plays back a recorded program automatically for each user by creating a menu of programs the user has not yet viewed from the bookmark information.

In addition, Patent Document 3 discloses a configuration which acquires information for identifying a viewer during viewing and during recording/playback of a content, which links the information acquired by the viewer identifying unit, to a playback scene of the content being recorded/played back, and stores them as viewing history data, and which outputs the recorded/played back scene of the content associated with the viewer.

Furthermore, Patent Document 4 discloses a configuration which has a camera mounted on a TV set and identifies a viewer from the video signal of the camera, which has a clock for acquiring time information, and which creates accurate individual audience rating data by collecting channel information of a TV set and individual time slot information based on the individual identifying information.

### PRIOR ART DOCUMENT

### PATENT DOCUMENT

Patent Document 1: Japanese Patent Laid-Open No. 2010-233268.
Patent Document 2: Japanese Patent Laid-Open No. 2006-174291.
Patent Document 3: Japanese Patent Laid-Open No. 2010-233143.
Patent Document 4: Japanese Patent Laid-Open No. 07-023012/1995.

### DISCLOSURE OF THE INVENTION

### PROBLEMS TO BE SOLVED BY THE INVENTION

The technique disclosed in the foregoing Patent Document 1 has the problem of including inaccurate viewing information because it collects only reception conditions of the IP broadcasting, therefore in case the user forgets to turn off the receiving terminal or in case of absence of a user would be inaccurately counted. In addition, the techniques disclosed in the Patent Document 2 and Patent Document 3 have a problem in that although they can associate a user with the viewing information, they cannot create detailed viewing information in cases like forgetting to turn off the receiving terminal or absence of the user, or various other internal states of the receiving terminal. Furthermore, the technique disclosed in the Patent Document 4 has a problem of being unable to avoid collection of inaccurate viewing information because it does not check the internal information of a display device or receiving terminal.

The present invention is implemented to solve the foregoing problems. Therefore it is an object of the present invention to collect accurate audience information in accordance with the state of the user consuming content, the state of the content rendering device such as a display, and the internal information of a receiving terminal.

### MEANS FOR SOLVING THE PROBLEMS

A receiving terminal in accordance with the present invention comprises a content receiving unit for receiving a content; a rendering device state detecting unit for detecting the rendering device state indicating whether the content the content receiving unit receives is rendered on a rendering device or not; a state detecting unit for identifying an audience event indicating a consumption mode of the content by analyzing the delivery mode of the content the content receiving unit receives and the rendering device state of the content the rendering device state detecting unit detects; an audience information creating unit for generating audience information corresponding to the audience event the state detecting unit identifies; and an audience information transmitting unit for outputting the audience information the audience information creating unit generates.

### ADVANTAGES OF THE INVENTION

According to the present invention, it can create accurate and meaningful audience information.

### BRIEF DESCRIPTION OF THE DRAWINGS

FIG. 1 is a diagram showing a configuration of an audience information collecting system of an embodiment 1;
FIG. 2 is a block diagram showing a detailed configuration of the audience information collecting system of the embodiment 1;
FIG. 3 is a flowchart showing the operation of the audience information collecting system of the embodiment 1;
FIG. 4 is a diagram illustrating a report pattern of audience information of the audience information collecting system of the embodiment 1;
FIG. 5 is a table showing audience events based on analysis of the state detection of the audience information collecting system of the embodiment 1;
FIG. 6 is a table showing the audience information corresponding to the audience events of the audience information collecting system of the embodiment 1;
FIG. 7 is a flowchart showing state detection processing of the audience information collecting system of the embodiment 1;
FIG. 8 is a flowchart showing the state detection processing for broadcast viewing of the audience information collecting system of the embodiment 1;
FIG. 9 is a flowchart showing the state detection processing for VOD viewing of the audience information collecting system of the embodiment 1;
FIG. 10 is a flowchart showing the state detection processing for recorded content viewing, copy, or move of the audience information collecting system of the embodiment 1;
FIG. 11 is a flowchart showing the state detection processing for broadcast recording of the audience information collecting system of the embodiment 1;
FIG. 12 is a diagram showing a configuration of an audience information collecting system of an embodiment 2;
FIG. 13 is a block diagram showing a detailed configuration of the audience information collecting system of the embodiment 2;
FIG. 14 is a flowchart showing the operation of the audience information collecting system of the embodiment 2;
FIG. 15 is a diagram illustrating a report pattern of the audience information of the audience information collecting system of the embodiment 2;
FIG. 16 is a table showing audience events based on analysis of the state detection of the audience information collecting system of the embodiment 2;
FIG. 17 is a table showing the audience information corresponding to the audience events of the audience information collecting system of the embodiment 2;
FIG. 18 is a flowchart showing state detection processing of the audience information collecting system of the embodiment 2;
FIG. 19 is a flowchart showing the state detection processing for external storage contents rendering of the audience information collecting system of the embodiment 2;
FIG. 20 is a flowchart showing the state detection processing for content recording of the audience information collecting system of the embodiment 2;
FIG. 21 is a flowchart showing the state detection processing for recorded content rendering of the audience information collecting system of the embodiment 2; and
FIG. 22 is a flowchart showing the state detection processing for other content playback on the audience information collecting system of the embodiment 2.

### BEST MODE FOR CARRYING OUT THE INVENTION

The best mode for carrying out the invention will now be described with reference to the accompanying drawings to explain the present invention in more detail.

### EMBODIMENT 1

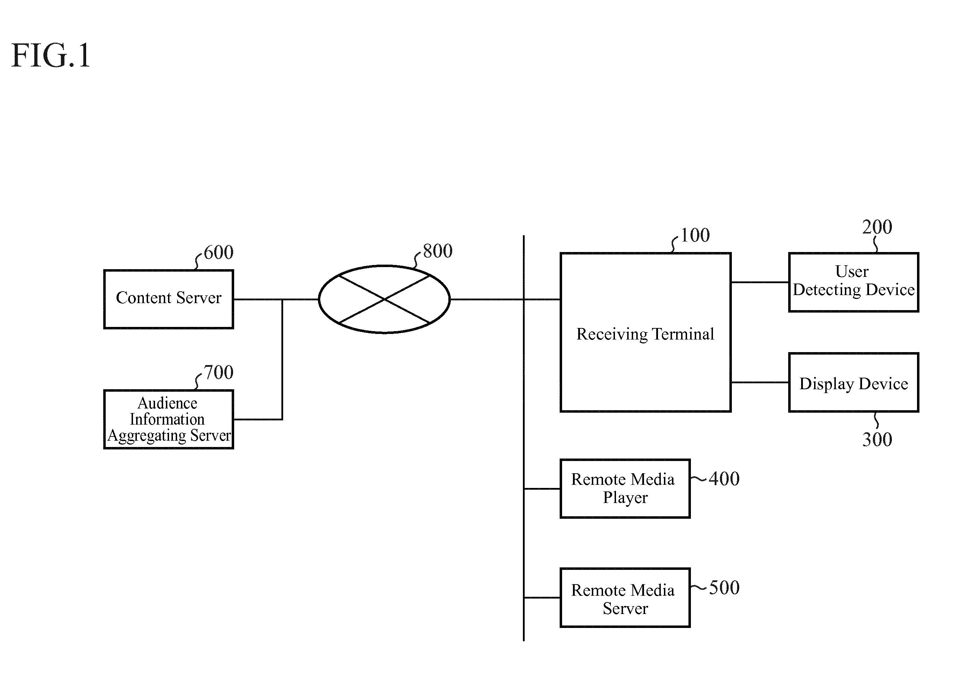

FIG. 1 is a block diagram showing a configuration of an audience information collecting system of an embodiment 1 in accordance with the present invention.

The audience information collecting system comprises a receiving terminal 100, a user detecting device 200, a display device 300, a remote media player 400, a remote media server 500, a content server 600, an audience information aggregating server 700 and IP network 800.

The receiving terminal 100, remote media player 400, remote media server 500, content server 600 and audience information aggregating server 700 are connected via the IP network 800, and the user detecting device 200 and display device 300 are connected to the receiving terminal 100. Incidentally, although the following description will be made on the assumption that the content server 600 and audience information aggregating server 700 are components on a service provider side, they can be changed appropriately.

The receiving terminal 100 receives a content the content server 600 of the service provider provides via the IP network 800.

The user detecting device 200 detects whether a user is present at a visible position from the display device 300 or not. The user detecting device 200 has a camera, for example, and detects whether the user is present or not by analyzing an image taken with the camera. As for user information other than the user presence, a configuration which detects and stores the number of users, sex and age is also possible. Various means for detecting a user without using video information are also possible such as a motion sensor, temperature sensor, human presence sensor utilizing infrared rays, ultrasonic waves or visible light, or user operation (operation for identifying each user with a remote control, for example). In addition, considering the right to privacy in recent years, a configuration is also possible which captures a user with the camera installed in the user detecting device 200, but outputs only a detection result of the user (such as "user detection", "user is absent", "detect three users" or the like) without outputting the image information taken. Incidentally, the user detecting device 200 can be included in the receiving terminal 100.

The display device 300, which is connected to the receiving terminal 100 via an HDMI (High-Definition Multimedia Interface) cable or the like, displays the content the receiving terminal 100 receives. Using the HDMI enables the receiving terminal 100 to grasp the state of the display device 300, and hence to detect the content display state of the display device 300. Incidentally, the display device 300 can be included in the receiving terminal 100. Even if the display device 300 is incorporated in the receiving terminal 100, a configuration is possible which enables the receiving terminal 100 to detect the content display state.

The remote media player 400 displays a received content. Furthermore, it can incorporate advanced functions to be used in various ways other than displaying a received content. For example, the remote media player 400 gains access to the receiving terminal 100 at a place away from it such as in a different room, sends a request to acquire a recorded content or a content during broadcast, and plays back and displays the content acquired. This enables the receiving terminal 100 to collect the audience information when the content is played back by the remote media player 400, even if the received content is not viewed during the broadcast.

The remote media server 500 is storage server equipment which is installed at a place away from the receiving terminal 100 such as in a different room, and which stores contents when making a backup of the receiving terminal 100 or when the capacity of the receiving terminal 100 is insufficient. The receiving terminal 100 determines copy or move of the content by detecting the data transmission to or from the remote media server 500, and manages as audience information of relevance.

The content server 600 on the service provider side provides the receiving terminal 100 with a TV content service, other content providing services and interactive service. The TV content service provides a broadcast and VOD (Video On Demand). The other content providing service provides music, e-books, news, weather and photographs, and the interactive service provides games and applications.

The audience information aggregating server 700 transmits a collection/report pattern setting that designates a format for collecting or reporting the audience information to the receiving terminal 100 of each subscriber who signs up for the service provider, and agrees with the audience information collection and report. The collection/report pattern setting describes, for example, types of the audience information to be collected, collection frequency, reporting frequency of the audience information collected, and the like. Incidentally, since the audience information to be collected is likely to contain individual information items or a viewing content or viewing pattern the subscriber wishes to keep private, a configuration is possible which collects the audience information after obtaining permission of the subscriber. As for the designation as to which audience information the subscriber permits to collect, the user carries it out at a service contract, or at signing up or altering the service. The information the user designates is managed by the service provider side, and is reflected on the collection/report pattern setting corresponding to each subscriber. Incidentally,a configurationisalsopossible which enables the subscriber to alter the permission setting of the collection of the audience information at any time.

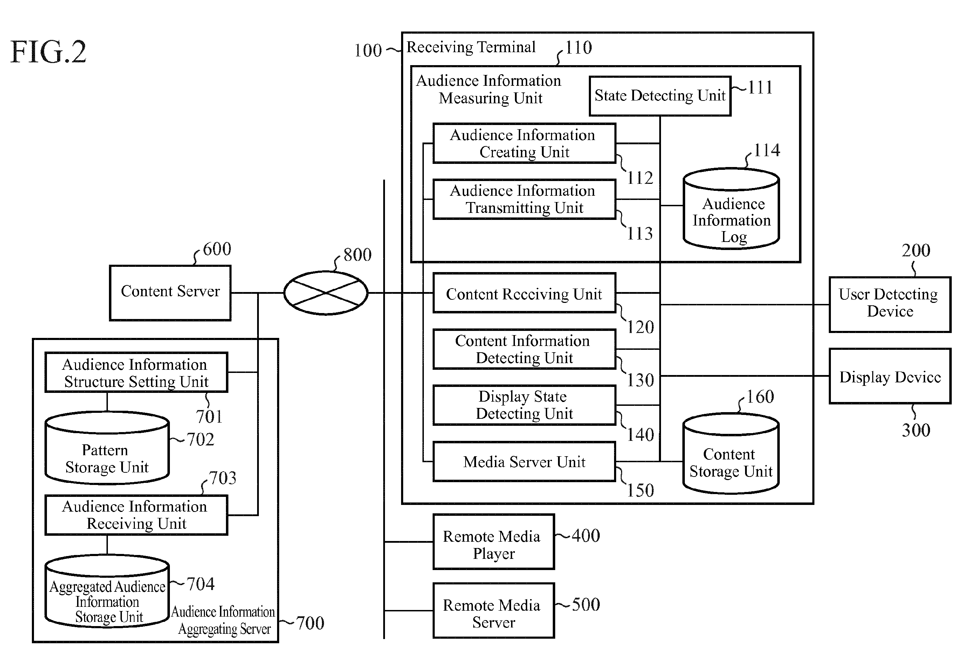

FIG. 2 is a block diagram showing a detailed configuration of the audience information collecting system of the embodiment 1 in accordance with the present invention. In particular, it shows the configuration of the receiving terminal 100 and audience information aggregating server 700 in detail.

The receiving terminal 100 comprises an audience information measuring unit 110, a content receiving unit 120, a content information detecting unit 130, a display state detecting unit 140, a media server unit 150 and a content storage unit 160. Furthermore, the audience information measuring unit 110 comprises a state detecting unit 111, an audience information creating unit 112, an audience information transmitting unit 113 and an audience information log 114.

The state detecting unit 111 detects the states of the individual components to collect the audience information the subscriber permits in accordance with the collection pattern setting in the collection/report pattern setting which is transmitted from the audience information aggregating server 700 and received by the receiving terminal 100. More specifically, it detects the content receiving state in the receiving terminal 100, the display state on the display device 300, the detection state of a user in front of the display device 300 and the state of the media server unit 150. The audience information creating unit 112 generates the audience information in accordance with the state information the state detecting unit 111 detects, and stores it in the audience information log 114. The audience information transmitting unit 113 transmits the audience information stored in the audience information log 114 to the audience information aggregating server 700 of the service provider in accordance with the report pattern setting in the collection/report pattern setting.

The content receiving unit 120 receives content for broadcast viewing or VOD viewing from the content server 600 via the IP network 800. The content information detecting unit 130 acquires the metadata about the content the content receiving unit 120 receives. The metadata about the content includes detailed information about the content such as a title and resolution. In addition, since the broadcast viewing and VOD viewing are different viewing services, their metadata differ as well. For example, as the metadata peculiar to the broadcast service, the broadcasting time and broadcasting date are contained.

The state detecting unit 111 detects whether the content is being received or not by referring to the receiving state of the content receiving unit 120, and detects, during receiving the content, the distribution mode of the content, that is, whether the receiving terminal 100 is receiving the broadcast or VOD. Furthermore, when the receiving terminal 100 is receiving the broadcast or VOD, the state detecting unit 111 acquires the metadata about the content from the information the content information detecting unit 130 detects.

The display state detecting unit 140 refers to the state of the HDMI interface, and detects the transmission state of the video signal to the display device 300. Confirming the display state of the display device 300 enables creating accurate audience information. For example, a necessary requirement for confirming a local viewing of an ordinary broadcast is to transmit the content the content receiving unit 120 is receiving to the display device 300. This is because a case, in which, although the broadcast is being received, a user does not view occurs frequently, and because of preventing erroneous audience information from being formed. More specifically, the display state detecting unit 140 is configured in such a manner as to confirm the display state of the display device 300 and to create the audience information only when the display is actually working, to prevent the erroneous audience information indicating that the user is viewing a broadcast from being created when the power of the receiving terminal 100 is on, but the power of the display device 300 is off in a TV set or the like. The detection result in the display state detecting unit 140 is transmitted to the state detecting unit 111.

The media server unit 150 provides a content recording function, a content providing function, and a content copy/move function.

First, as the content recording function, the media server unit 150 stores the content the content receivingunit 120 receives and the metadata about the content in the content storage unit 160, and enables playback by the receiving terminal 100 or remote media player 400. At the same time, it collects the audience information about the recording of the content, and transmits it to the state detecting unit 111.

Next, as the content providing function, the media server unit 150 provides a recorded content stored in the content storage unit 160 to the receiving terminal 100 or to the remote media player 400 connected to the network. More specifically, the playback side receives a content list including related metadata such as the title of the content for selecting the recorded content, selects a recorded content to be played back from the content list received, and requests the media server unit 150 to provide the content selected. Receiving the request, the media server unit 150 provides the selected recorded content to the receiving terminal 100 or remote media player 400. When it provides it to the receiving terminal 100, it executes the processing internally between the content receiving unit 120 and the media server unit 150. The media server unit 150 collects the audience information about the content playback and transmits it to the state detecting unit 111.

In addition, as a different content providing function, the media server unit 150 provides the remote media player 400 with the content the content receiving unit 120 receives. More specifically, the playback side requests the playback of the content the content receiving unit 120 is receiving. Receiving the request, the media server unit 150 provides the remote media player 400 with the content the content receiving unit 120 is receiving.

As the content copy/move function, the media server unit 150 copies or moves the recorded content stored in the content storage unit 160 to the remote media server 500 connected to the network. The copy or move of the recorded content occurs when transferring the recorded content to portable equipment or medium or when the storage area of the content storage unit 160 runs low. Incidentally, as for the contents that are portably copied, they are managed as the audience information, and the audience information aggregating server 700 of the service provider aggregates them. The media server unit 150 collects the audience information items about the copy and move of the contents and transmits them to the state detecting unit 111.

Although the details are described above, the user detecting device 200 detects information about a user sitting in front of the display device 300 and transmits it to the state detecting unit 111. As for the detection and output of the information by the user detecting device 200, there are some cases where it is determined and limited strictly by the collection/report pattern setting made by the audience information aggregating server 700. When the detection and output of the user detecting device 200 is for instance, strictly limited, the user detecting device 200 reports only the presence or absence of the user.

Next, details of the audience information aggregating server 700 will be described.

The audience information aggregating server 700 comprises an audience information structure setting unit 701, a pattern storage unit 702, an audience information receiving unit 703 and an aggregated audience information storage unit 704.

The audience information structure setting unit 701 sets a collection pattern designating the structure of the audience information the audience information creating unit 112 of the receiving terminal 100 generates, and a report pattern used when the audience information transmitting unit 113 transmits the audience information. The collection/report pattern the audience information structure setting unit 701 sets is stored in the pattern storage unit 702.

More specifically, the audience information structure setting unit 701 customizes the collection pattern of the audience information to suit the receiving terminal 100 of each user in accordance with the audience information collection permission a subscriber determines during service contract sign up or during service subscription/change, and stores the customized collection pattern in the pattern storage unit 702. In addition, the audience information structure setting unit 701 sets the timing for receiving the audience information report from the receiving terminal 100, and stores it in the pattern storage unit 702. As for the timing of the report, it is possible to set it at a fixed period, at a random period, immediately or on demand. In addition, when a change of the collection pattern or report timing occurs, the audience information structure setting unit 701 transmits information for setting the collection/report pattern again to the appropriate receiving terminal 100 and changes the settings.

The audience information receiving unit 703 receives the audience information items collected by each receiving terminal 100, and aggregates and manages them. The audience information items aggregated by the audience information receiving unit 703 are stored in the aggregated audience information storage unit 704. The audience information items stored are used for improving the service provision in the service provider, or provided to a third party such as a content provider.

Next, the operation of the audience information collecting system of the embodiment 1 will be described.

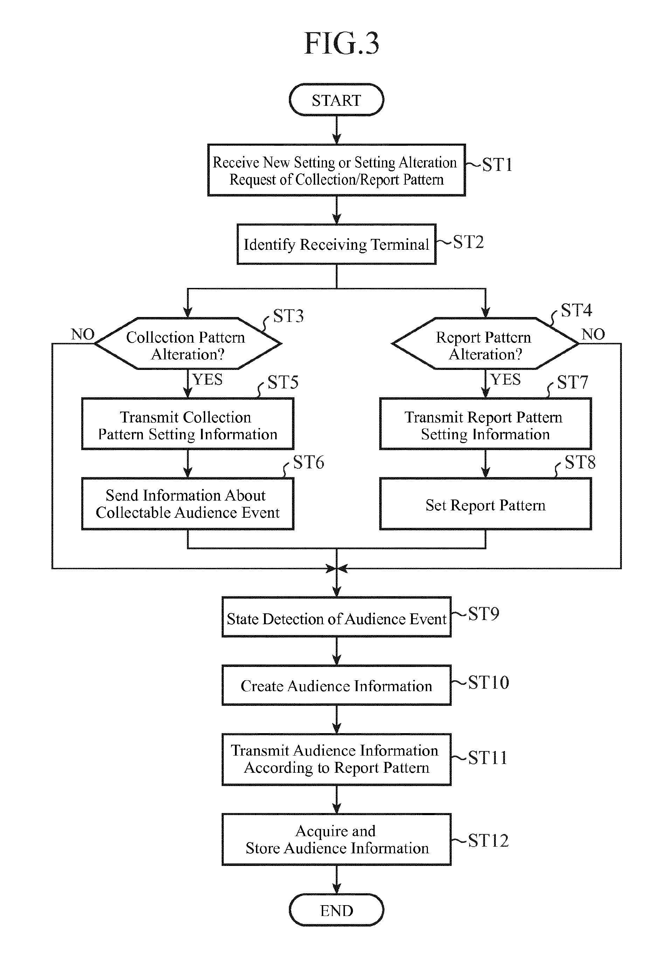

FIG. 3 is a flowchart showing the operation of the audience information aggregating server and receiving terminal of the audience information collecting system of the embodiment 1.

As for a collection pattern of the audience information that is selected by a subscriber via an operation input unit (not shown) or the like of the receiving terminal 100, or as for a report pattern that is managed by the service provider via an operation input unit (not shown) of the audience information aggregating server 700, if the audience information structure setting unit 701 receives a new setting or setting alteration request for them (step ST1), it identifies the receiving terminal 100 that receives the request for the collection pattern and the target receiving terminal of the report pattern alteration (step ST2). Furthermore, the audience information structure setting unit 701, referring to the collection/report pattern of the appropriate receiving terminal 100, which is stored in the pattern storage unit 702, decides on whether the request received at step ST1 asks an alteration of the collection pattern (step ST3), and likewise decides on whether it asks an alteration of the report pattern (step ST4).

When it asks the alteration of the collection pattern (YES at step ST3), the audience information structure setting unit 701 transmits collection pattern setting information for setting a new collection pattern to the audience information creating unit 112 of the receiving terminal 100 (step ST5). The audience information creating unit 112, referring to the collection pattern setting information transmitted at step ST5, notifies the state detecting unit 111 of the information about a collectable audience event permitted by the subscriber (step ST6). On the other hand, unless it asks the alteration of the collection pattern (NO at step ST3), the processing proceeds to step ST9.

When the request asks the alteration of the report pattern (YES at step ST4), the audience information structure setting unit 701 transmits report pattern setting information for setting a new report pattern to the audience information transmitting unit 113 of the receiving terminal 100 (step ST7). The audience information transmitting unit 113 sets the report pattern transmitted at step ST7 (step ST8). On the other hand, unless it asks the alteration of the report pattern (NO at step ST4), the processing proceeds to step ST9.

The state detecting unit 111 carries out the state detection of a collectable audience event, and transmits the result to the audience information creating unit 112 (step ST9). The audience information creating unit 112 generates the audience information in accordance with the state detection information transmitted at step ST9, and stores it in the audience information log 114 (step ST10). The audience information transmitting unit 113, when transmission timing of the audience information comes by referring to the report pattern stored, reads the audience information stored in the audience information log 114 and transmits it to the audience information aggregating server 700 (step ST11). The audience information receiving unit 703 of the audience information aggregating server 700 acquires and aggregates the audience information transmitted at step ST11, stores it in the aggregated audience information storage unit 704 (step ST12), and terminates the processing.

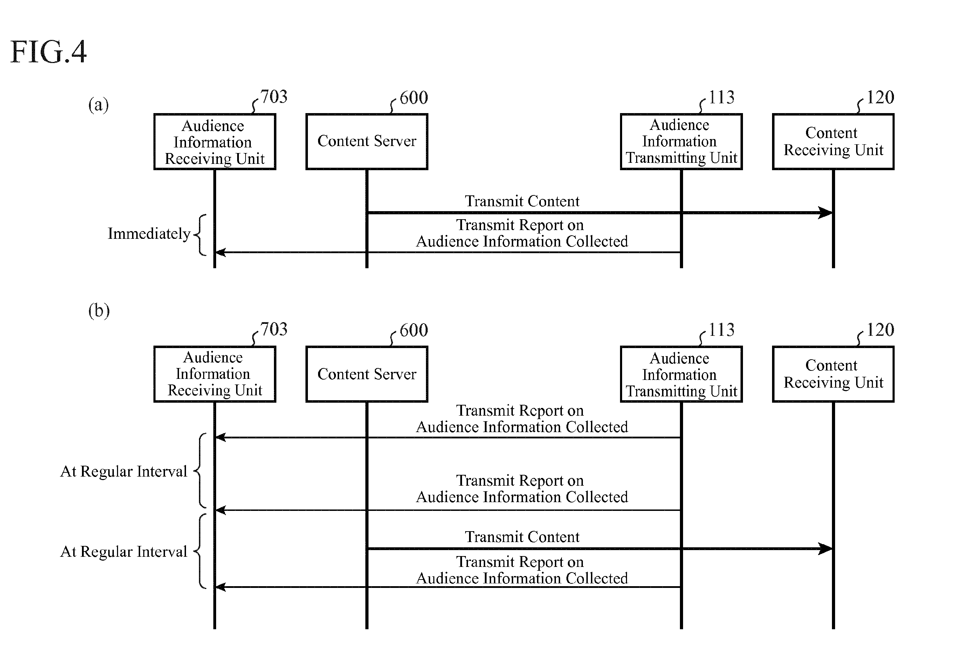

FIG. 4 is a diagram illustrating the report pattern in the processing at step ST11 of the flowchart of FIG. 3 described above.

FIG. 4 (a) is a diagram illustrating a case where the report pattern is set at "immediately ". In this case, the content server 600 transmits a content, and immediately after the content receiving unit 120 receives the content, the audience information transmitting unit 113 transmits the audience information to the audience information receiving unit 703. FIG. 4 (b) is a diagram illustrating a case where the report pattern is set at "fixed intervals". In this case, regardless of the content transmission state from the content server 600, the audience information transmitting unit 113 transmits the audience information at fixed intervals.

Incidentally, in the diagram of FIG. 4, a content request made between the content server 600 and the content receiving unit 120 is not shown.

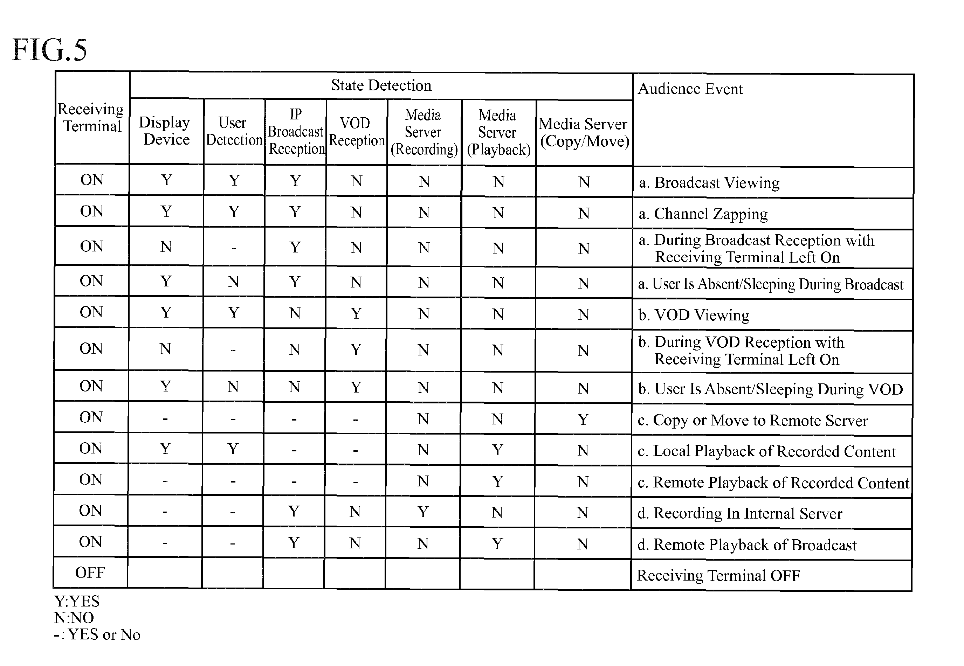

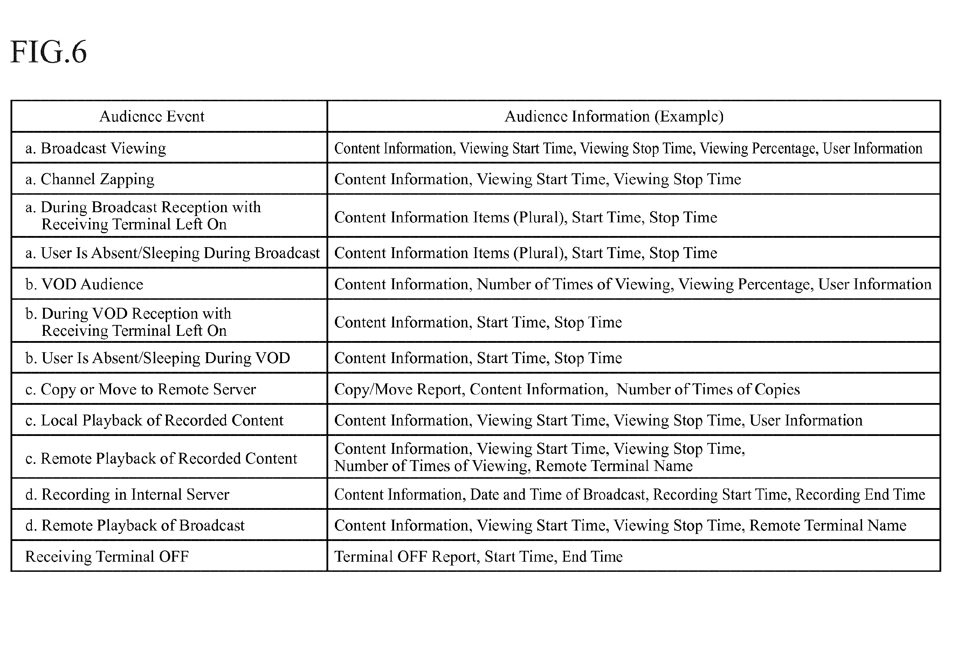

Next, the operation of the state detection of the receiving terminal 100 will be described. First, an audience event necessary for the state detection will be described. FIG. 5 and FIG. 6 are tables illustrating audience events and the audience information items corresponding to the audience events of the receiving terminal of the audience information collecting system of the embodiment 1.

First, FIG. 5 is a table showing an example of the audience events obtained by the analysis of the state detection information items of the state detecting unit 111.

The state detecting unit 111 identifies the audience events in accordance with the state detection information items about the display device 300, user detecting device 200, content receiving unit 120 and media server unit 150. The audience event separates the types of the audience information items.

To identify the audience event "broadcast viewing", it is indispensable conditions as shown in FIG. 5 that the "display device", "user detection" and "IP broadcast reception" are in a normal operational state as indicated by "Y", and that the "VOD reception" and "media server (recording, playback and copy/move) are in a nonoperational state as indicated by "N". If these conditions are satisfied, the audience event can be identified as "broadcast viewing" at a high probability. However, there are some cases of channel surfing depending on the viewing time as clarified below.

Although the conditions for identifying the audience event "channel surfing" are the same as those of the foregoing "broadcast viewing", an event, which has a shorter time from the viewing start time to viewing end time that are recorded as the audience information, can be identified as the "channel surfing".

To identify the audience event "during broadcast reception with receiving terminal being left on", it is necessary that only "IP broadcast reception" is in an operational state as indicated by "Y" and the "display device" and "media server (recording, playback, copy/move)" are in the off state as indicated by "N" as shown in FIG. 5. Incidentally, since the display device 300 is in the off state, the presence or absence of the user detection has nothing to do in this case. The audience event "during broadcast reception with receiving terminal being left on" often arises when using an external terminal such as an STB (set top box).

As for the audience event "user is absent/sleeping during broadcast", it is necessary that "display device" and "IP broadcast reception" are in the normal operational state as indicated by "Y", and that "user detection", "VOD reception" and "media server (recording, playback, copy/move)" are in the nonoperational state as indicated by "N".

To identify the audience event "VOD viewing", or "during VOD reception with receiving terminal being left on", or "user is absent/sleeping during VOD", it is necessary in the foregoing "broadcast viewing", "during broadcast reception with receiving terminal being left on", and "user is absent/sleeping during broadcast" that the "IP broadcast reception" is in the off state as indicated by "N", and instead the "VOD reception" is in the operational state as indicated by "Y".

As for the audience event "copy/move to remote server" which executes the copy or move function of the media server unit 150, it is necessary that only the "media server (copy/move)" is in the operational state as indicated by "Y" as shown in FIG. 5. As for other events executed simultaneously with the copy or move (such as playback of a recorded content or recording of a content), they are managed as a different event, and appropriate audience information is created for each of them.

As for the audience event "local playback of recorded content" which executes the local playback function of the media server unit 150, it is necessary as shown in FIG. 5 that the "display device", "user detection" and "media server (playback)" are in the operational state as indicated by "Y", and that the "media server (recording, copy/move)" is in the nonoperational state as indicated by "N".

As for the audience event "remote terminal playback of recorded content", in which the media server unit 150 transmits a content to the remote media player 400, it is necessary as shown in FIG. 5 that only the "media server (playback)" is in the operational state as indicated by "Y", and that the "media server (recording, copy/move)" is in the nonoperational state as indicated by "N".

As for the audience event "recording in internal server", in which a broadcast is recorded, it is necessary as shown in FIG. 5 that the "IP broadcast reception" and "media server (recording)" are in the operational state as indicated by "Y", and that the "VOD reception" and "media server (playback, copy/move)" are in the nonoperational state as indicated by "N".

As for the audience event "playback broadcast at remote terminal", in which the remote media player 400 plays back a broadcast received, it is necessary as shown in FIG. 5 that the "IP broadcast reception" and "media server (playback)" are in the operational state as indicated by "Y", and that the "VOD reception" and "media server (playback, copy/move)" are in the nonoperational state as indicated by "N".

FIG. 6 shows an example of the audience information items created in connection with the audience events shown in FIG. 5.

When the audience event is the "broadcast viewing", for example, "content information, viewing start time, viewing stop time, viewing percentage, user information" are created as the audience information.

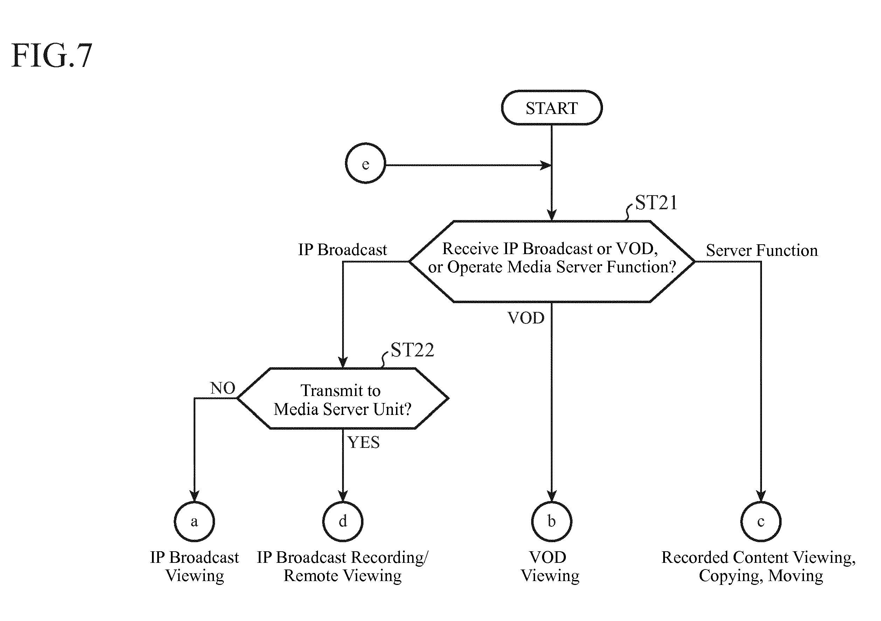

Next, the operation of the state detecting unit 111 of the receiving terminal 100 will be described with reference to flowcharts from FIG. 7 to FIG. 11.

First, FIG. 7 is a flowchart showing the general operation of the state detecting unit of the audience information collecting system of the embodiment 1.

First, referring to the receiving state of the content receiving unit 120 and the operational state of the media server unit 150, the state detecting unit 111 decides on whether the receiving terminal 100 receives an IP broadcast, receives a VOD, or operates a media server function (step ST21).

If the state detecting unit 111 decides at step ST21 that the receiving terminal 100 is receiving the IP broadcast, it decides on whether the IP broadcast received is transmitted to the media server unit 150 or not (step ST22). Unless it is transmitted to the media server unit 150 (NO at step ST22), the state detecting unit 111 decides that the IP broadcast viewing is carried out in the receiving terminal 100, and proceeds to processing a. On the other hand, if it is output to the media server unit 150 (YES at step ST22), it decides that the IP broadcast recording or IP broadcast remote viewing is carried out in the media server unit 150, and proceeds to processing d.

In addition, if the state detecting unit 111 decides at step ST21 that the VOD is being received, it decides that the VOD viewing is being carried out in the receiving terminal 100, and proceeds to processing b. Likewise, if it decides at step ST21 that a media server function is being operated, it decides that the viewing of a recorded content or the copy or move of a recorded content is being carried out in the media server unit 150, and proceeds to processing c.

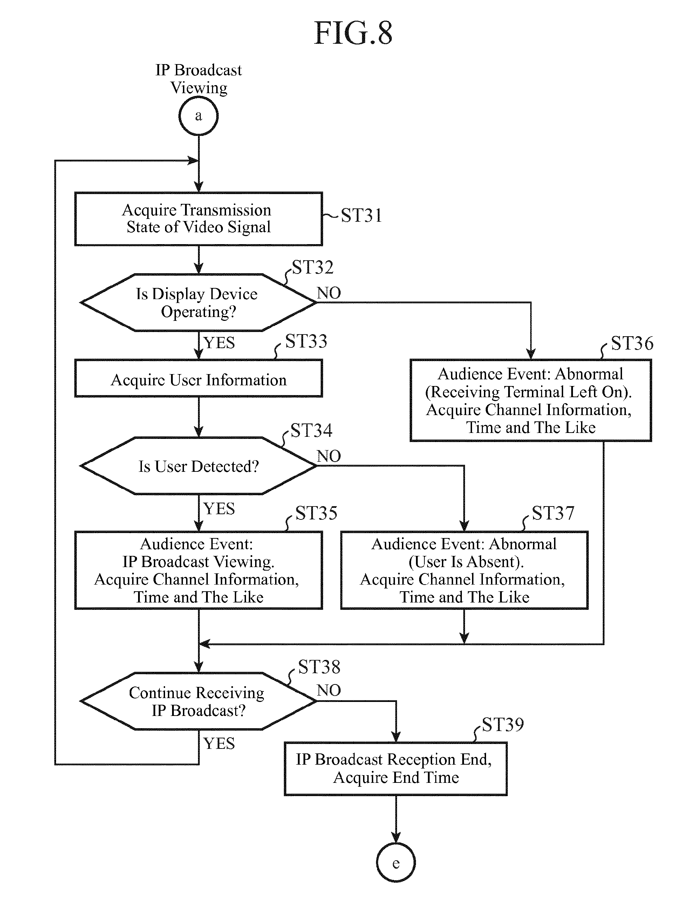

Next, referring to the flowchart of FIG. 8, details of the processing a will be described. In the processing a, the state detecting unit 111 executes the state detection for detecting the audience events occurring in the IP broadcast viewing, and carries out information collection such as the content information, time and the like.

The state detecting unit 111 acquires the transmission state of the video signal from the display state detecting unit 140 to the display device 300 (step ST31), and decides on whether the display device 300 is in the operational state or not by referring to the transmission state of the video signal acquired (step ST32). When the display device 300 is in the operational state (YES at step ST32), the state detecting unit 111 acquires user information about a user in front of the display device 300 from the user detecting device 200 (step ST33), and decides on whether the user is sitting in front of the display device 300 or not by referring to the user information acquired (step ST34). When the user is sitting in front of the display device 300 (YES at step ST34), the state detecting unit 111 detects that the audience event is the IP broadcast viewing and acquires the viewing channel information, time and the like by referring to the information about the content acquired from the content information detecting unit 130 (step ST35).

On the other hand, unless the display device 300 is in the operational state (NO at step ST32), the state detecting unit 111 not only detects that the audience mode is abnormal (receiving terminal is left on), but also acquires the viewing channel information, time and the like by referring to the information about the content acquired from the content information detecting unit 130 (step ST36).

In addition, unless the user is sitting in front of the display device 300 (NO at step ST34), the state detecting unit 111 not only detects that the audience mode is abnormal (user is absent), but also acquires the viewing channel information, time and the like by referring to the information about the content acquired from the content information detecting unit 130 (step ST37).

After that, the state detecting unit 111 decides on whether the receiving terminal 100 continues to receive the IP broadcast or not (step ST38). If it decides that the receiving terminal 100 continues to receive the IP broadcast (YES at step ST38), it returns to the processing at step ST31, and repeats the foregoing processing. On the other hand, unless it decides that the receiving terminal 100 continues to receive the IP broadcast (NO at step ST38), it detects the end of receiving the IP broadcast and acquires the reception end time (step ST39). After that, the flow returns to the processing at step ST21 of FIG. 7 and repeats the foregoing processing.

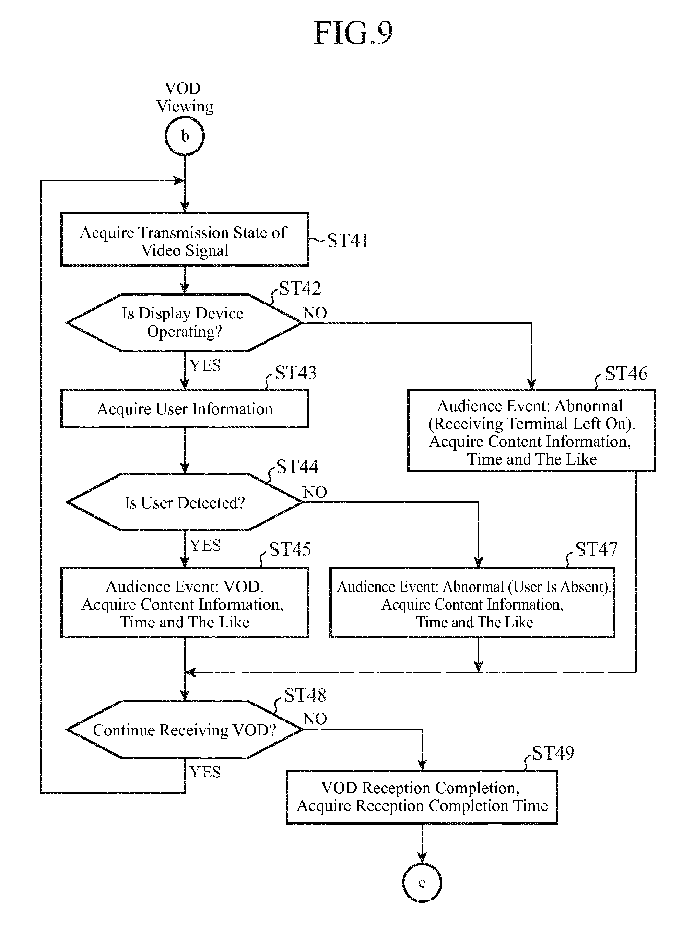

Next, referring to the flowchart of FIG. 9, details of the processing b will be described. In the processing b, the state detecting unit 111 executes the state detection for detecting the audience events occurring in the VOD viewing, and carries out information collection such as the content information, time and the like.

The state detecting unit 111 acquires the transmission state of the video signal from the display state detecting unit 140 to the display device 300 (step ST41), and decides on whether the display device 300 is in the operational state or not by referring to the transmission state of the video signal acquired (step ST42). When the display device 300 is in the operational state (YES at step ST42), the state detecting unit 111 further acquires the user information about a user in front of the display device 300 from the user detecting device 200 (step ST43), and decides on whether the user is sitting in front of the display device 300 or not by referring to the user information acquired (step ST44). When the user is sitting in front of the display device 300 (YES at step ST44), the state detecting unit 111 not only detects that the audience event is the VOD viewing, but also acquires the content information, time and the like from the content information detecting unit 130 (step ST45).

On the other hand, unless the display device 300 is in the operational state (NO at step ST42), the state detecting unit 111 not only detects that the audience mode is abnormal (receiving terminal is left on), but also acquires the viewing channel information, time and the like by referring to the information about the content acquired from the content information detecting unit 130 (step ST46). In addition, unless the user is sitting in front of the display device 300 (NO at step ST44), the state detecting unit 111 not only detects that the audience mode is abnormal (user is absent), but also acquires the content information, time and the like from the content information detecting unit 130 (step ST47).

After that, the state detecting unit 111 decides on whether the receiving terminal 100 continues VOD reception or not (step ST48). If it decides that the receiving terminal 100 continues the VOD reception (YES at step ST48), it returns to the processing at step ST41, and repeats the foregoing processing. On the other hand, unless it decides that the receiving terminal 100 continues the VOD reception (NO at step ST48), it detects the completion of the VOD reception and acquires the reception completion time. After that, the flow returns to the processing at step ST21 of FIG. 7 and repeats the foregoing processing (step ST49).

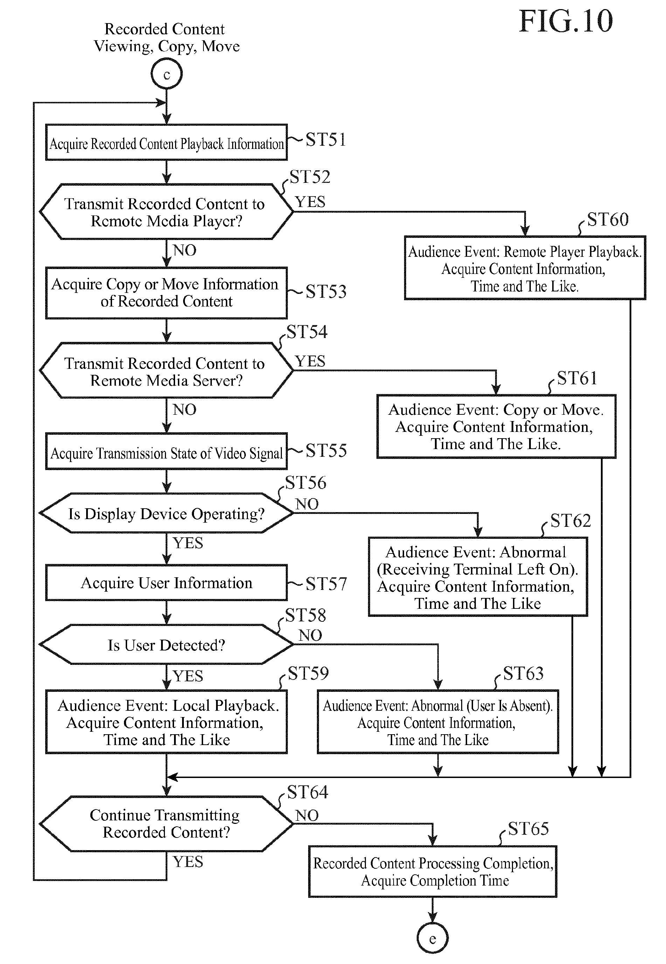

Next, referring to the flowchart of FIG. 10, details of the processing c will be described. In the processing c, the state detecting unit 111 executes the state detection for detecting the audience events occurring in the viewing, copying or moving of a recorded content, and carries out information collection of the content information, time and the like.

The state detecting unit 111 acquires the information about the content playback from the media server unit 150 (step ST51), refers to the information about the content playback acquired, and decides on whether the media server unit 150 is transmitting the recorded content to the remote media player 400 or not (step ST52). Unless it is transmitting the recorded content to the remote media player 400 (NO at step ST52), the state detecting unit 111 further acquires the information about the copy or move of a content from the media server unit 150 (step ST53), and decides on whether the media server unit 150 is transmitting the recorded content to the remote media server 500 by referring to the information acquired (step ST54).

Unless the media server unit 150 is transmitting the recorded content to the remote media server 500 (NO at step ST54), the state detecting unit 111 acquires the transmission state of the video signal from the display state detecting unit 140 to the display device 300 (step ST55), refers to the transmission state of the video signal acquired, and decides on whether the display device 300 is in the operational state or not (step ST56). When the display device 300 is in the operational state (YES at step ST56), the state detecting unit 111 further acquires the user information about a user in front of the display device 300 from the user detecting device 200 (step ST57), and decides on whether the user is sitting in front of the display device 300 or not by referring to the user information acquired (step ST58). When the user is sitting in front of the display device 300 (YES at step ST58), the state detecting unit 111 detects that the audience event is the local playback of the recorded content, and acquires the content information, time and the like from the content information detecting unit 130 (step ST59).

On the other hand, when the media server unit 150 is transmitting the recorded content to the remote media player 400 (YES at step ST52), the state detecting unit 111 detects that the audience event is the playback of the recorded content by the remote media player 400, and acquires the content information, time and the like from the content information detecting unit 130 (step ST60).

In addition, when the media server unit 150 is transmitting the recorded content to the remote media server 500 (YES at step ST54), the state detecting unit 111 detects that the audience event is the copy or move of the recorded content, and acquires the content information, time and the like from the content information detecting unit 130 (step ST61).

On the other hand, unless the display device 300 is in the operational state (NO at step ST56), the state detecting unit 111 detects that the audience mode is abnormal (receiving terminal is left on), and acquires the content information, time and the like from the content information detecting unit 130 (step ST62).

In addition, unless the user is sitting in front of the display device 300 (NO at step ST58), the state detecting unit 111 detects the audience mode is abnormal (user is absent), and acquires the content information, time and the like from the content information detecting unit 130 (step ST63).

After that, the state detecting unit 111 decides on whether the media server unit 150 continues to transmit the recorded content (step ST64) or not. When the media server unit 150 continues to transmit the recorded content (YES at step ST64), the state detecting unit 111 returns to the processing at step ST51, and repeats the foregoing processing. On the other hand, unless the media server unit 150 continues to transmit the recorded content (NO at step ST64), the state detecting unit 111 detects the completion of the recorded content processing and acquires the processing completion time (step ST65). After that, the flow returns to the processing at step ST21 of FIG. 7 and repeats the foregoing processing.

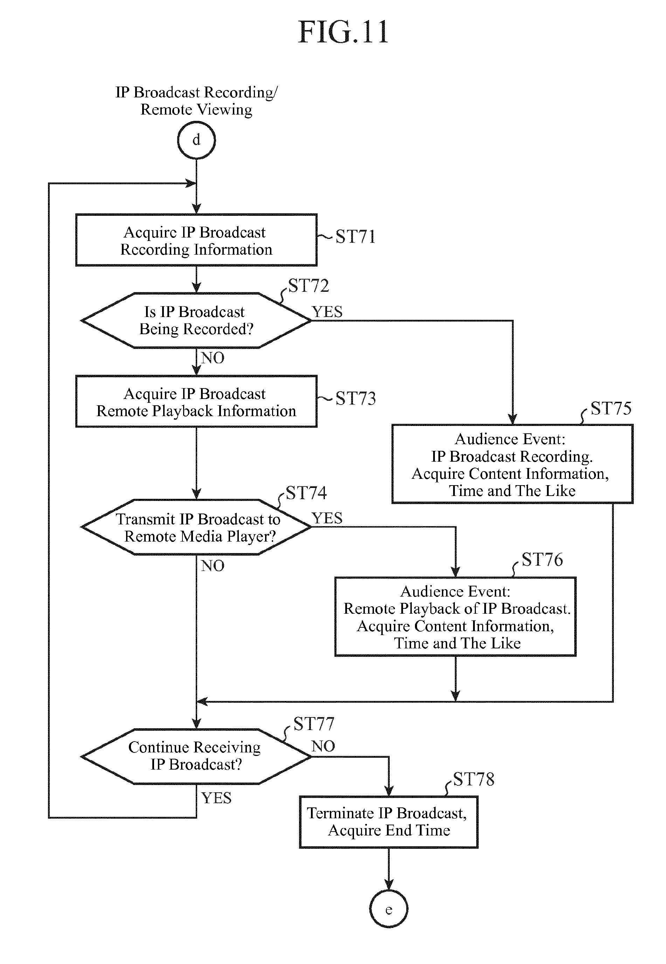

Next, referring to the flowchart of FIG. 11, details of the processing d will be described. In the processing d, the state detecting unit 111 executes the state detection for detecting the audience events occurring in the IP broadcast recording or IP broadcast remote viewing, and carries out information collection of the content information, time and the like.

The state detecting unit 111 acquires information about IP broadcast recording from the media server unit 150 (step ST71), refers to the IP broadcast recording information acquired, and decides on whether the media server 150 is recording the IP broadcast or not (step ST72). Unless the media server unit 150 is recording the IP broadcast (NO at step ST72), the state detecting unit 111 further acquires information about the remote playback of the IP broadcast by the media player 400 from the media server unit 150 (step ST73), refers to the IP broadcast remote playback information acquired, and decides on whether the media server unit 150 is transmitting the IP broadcast to the remote media player 400 or not (step ST74). Unless it is transmitting the IP broadcast to the remote media player 400 (NO at step ST74), the processing proceeds to step ST77.

On the other hand, when the media server unit 150 is recording the IP broadcast (YES at step ST72), the state detecting unit 111 detects that the audience event is recording of the IP broadcast, and acquires the content information, time and the like from the content information detecting unit 130 (step ST75).

In addition, when the media server unit 150 transmits the IP broadcast to the remote media player 400 (YES at step ST74), the state detecting unit 111 detects that the audience event is the remote playback of the IP broadcast, and acquires the content information, time and the like from the content information detecting unit 130 (step ST76).

After that, the state detecting unit 111 decides on whether the receiving terminal 100 continues to receive the IP broadcast (step ST77). If the receiving terminal 100 continues to receive the IP broadcast (YES at step ST77), the state detecting unit 111 returns to the processing at step ST71 and repeats the foregoing processing. On the other hand, unless the receiving terminal 100 continues to receive the IP broadcast (NO at step ST77), the state detecting unit 111 detects the reception end of the IP broadcast and acquires the reception end time (step ST78). After that, the flow returns to the processing at step ST21 of FIG. 7 and repeats the foregoing processing.

As described above, according to the present embodiment 1, it is configured in such a manner as to comprise the state detecting unit 111 for detecting the state of the receiving terminal 100 by acquiring and analyzing the information about the user detection by the user detecting device 200, the information about the display state on the display device 300 from the display state detecting unit 140, and the information about the processing state of the content from the media server unit 150; and the audience information creating unit 112 for generating the audience information in accordance with the state of the receiving terminal 100 the state detecting unit 111 detects. Accordingly, it can create accurate and meaningful audience information. This enables providing the service provider side (audience information aggregating server 700) with the appropriate information which is useful for it to aggregate the audience information.

In addition, according to the present embodiment 1, since it is configured in such a manner as to comprise the audience information structure setting unit 701 for placing a restriction on the audience information collection in accordance with the permission of a subscriber and for setting a report pattern of the audience information collected, it can collect the audience information while protecting the privacy of the subscriber and user.

### EMBODIMENT 2

The present embodiment 2 shows a configuration that incorporates the same configuration as the audience information measuring unit 110 shown in the embodiment 1 into the remote media player 400 to create accurate and meaningful audience information about the remote media player 400. The remote media player 400 receives a content transmitted from the content server 600, receiving terminal 100 and other remote media server 500, and plays it back in real time or after temporarily storing it. Monitoring the internal state of the remote media player 400 such as a playback state or storage state enables collecting more detailed audience information using the viewing history (viewing of a partial content or viewing of the whole content) and the number of times viewing.

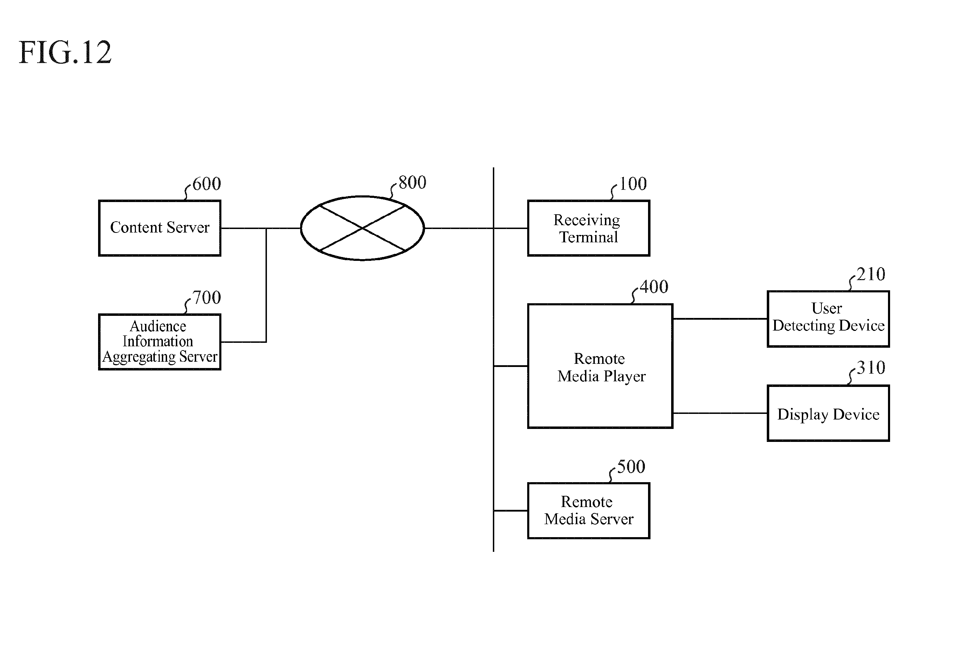

FIG. 12 is a block diagram showing a configuration of the audience information collecting system of the embodiment 2 in accordance with the present invention. In the following explanation, the same or similar components to those of the audience information collecting system of the embodiment 1 are designated by the same reference numerals as those used in the embodiment 1, and their description will be omitted or simplified.

The audience information collecting system of the embodiment 2 comprises the receiving terminal 100, the remote media player 400, a user detecting device 210, a display device 310, the remote media server 500, the content server 600, the audience information aggregating server 700 and the IP network 800. The receiving terminal 100, remote media player 400, remote media server 500, content server 600 and audience information aggregating server 700 are interconnected via the IP network 800, and the user detecting device 210 and display device 310 are connected to the remote media player 400. Incidentally, as for the content server 600 and audience information aggregating server 700, although they are described as the components on the service provider side in the following explanation, they can be altered appropriately.

The receiving terminal 100 receives a content the content server 600 of the service provider provides via the IP network 800. It transmits the content it receives to the remote media player 400 in real time, or transmits to the remote media player 400 after temporarily storing it in the receiving terminal 100. Incidentally, the receiving terminal 100 of the embodiment 2 can also be configured in the same manner as the receiving terminal 100 shown in FIG. 1 of the embodiment 1, which has the user detecting device 200 and display device 300 connected thereto, and plays back the content it receives and collects the audience information.

The remote media player 400 is composed of a mobile receiving terminal, for example, and has various advanced functions available just as the foregoing the embodiment 1. More specifically, besides the functions of receiving, playing back or recording the content the content server 600 of the service provider offers via the IP network 800, it acquires and plays back a content on air or a recorded content, which is provided from the receiving terminal 100 at a distant place such as a different room within a house or from the remote media server 500. This enables collecting the audience information when the remote media player 400 plays back the content even though the content is not viewed during the broadcast.

The user detecting device 210 detects whether a user is present at a visible position from the display device 310 or not. As in the foregoing the embodiment 1, the user detecting device 210 comprises a camera, for example, and detects whether the user is present or not by analyzing an image taken with the camera. As for user information other than the user presence, a configuration is also possible which detects and stores the number of users, sex and age. Various means for detecting a user without using video information are also possible such as a motion sensor, temperature sensor, human presence sensor utilizing infrared rays, ultrasonic waves or visible light, or user operation (operation for identifying each user with a remote control, for example). In addition, considering the right to privacy in recent years, a configuration is also possible which takes a user with the camera installed in the user detecting device 210, but outputs only a detection result of the user (such as "user detection", "user is absent", "detect three users" or the like) without outputting the video information taken. Incidentally, the user detecting device 210 can be included in the remote media player 400.

The display device 310, which is connected to the remote media player 400 via an HDMI cable or the like as in the foregoing embodiment 1, displays the contents the remote media player 400 receives. Using the HDMI enables the remote media player 400 to grasp the state of the display device 310, and hence to detect the content display state of the display device 310. Incidentally, the display device 310 can be included in the remote media player 400. Even if the display device 310 is incorporated in the remote media player 400, a configuration is possible which enables the remote media player 400 to detect the content display state.

The remote media server 500, in addition to the configuration of the embodiment 1, provides a content it stores to the remote media player 400 or other terminal. As for the content server 600 and audience information aggregating server 700, since they are the same as those of the embodiment 1, their description will be omitted.

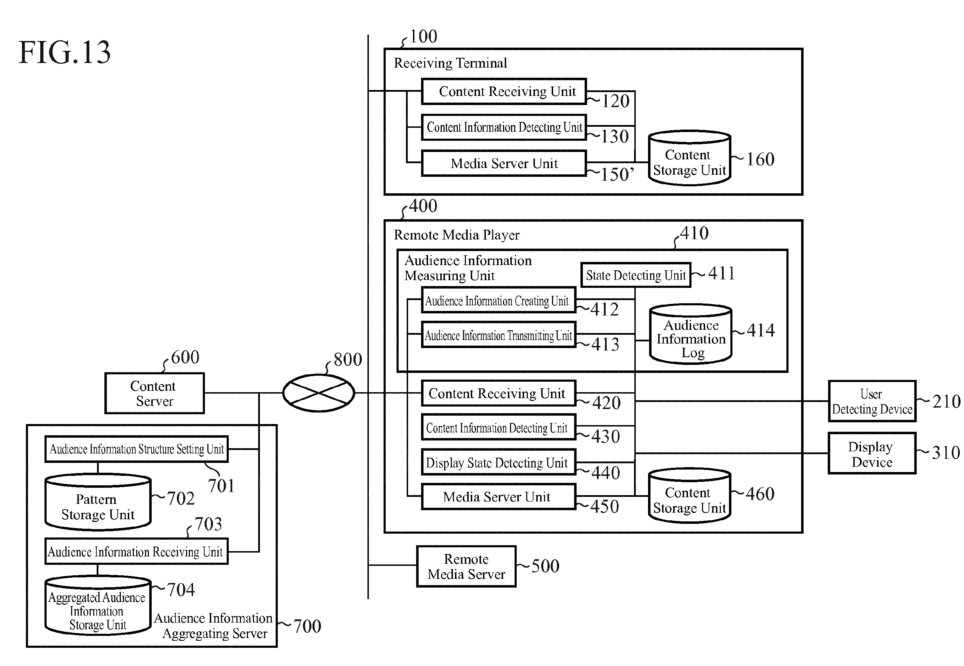

FIG. 13 is a block diagram showing a detailed configuration of the audience information collecting system of the embodiment 2 in accordance with the present invention. In particular, it shows the configuration of the receiving terminal 100, remote media player 400 and audience information aggregating server 700 in detail.

The receiving terminal 100 shown in FIG. 13 comprises the content receiving unit 120, the content information detecting unit 130, a media server unit 150' and the content storage unit 160. The content receiving unit 120, content information detecting unit 130 and content storage unit 160 has the same configuration as those of the foregoing the embodiment 1. On the other hand, as for the media server unit 150', although it provides the remote media player 400 not only with a recorded content stored in the content storage unit 160, but also with the content the content receiving unit 120 receives as in the embodiment 1, it does not collect the audience information about the content playback.

Incidentally, the receiving terminal 100 can be configured in the same manner as that of the embodiment 1, which has the user detecting device 200 and display device 300 connected thereto and the audience information measuring unit 110 for measuring the audience information, and has the same functions as the embodiment 1.

The remote media player 400 comprises an audience information measuring unit 410, a content receiving unit 420, a content information detecting unit 430, a display state detecting unit 440, a media server unit 450 and a content storage unit 460. Furthermore, the audience information measuring unit 410 comprises a state detecting unit 411, an audience information creating unit 412, an audience information transmitting unit 413 and an audience information log 414.

The state detecting unit 411 detects the states of the individual components to collect the audience information the subscriber permits in accordance with the collection pattern setting in the collection/report pattern setting which is transmitted from the receiving terminal 100 or audience information aggregating server 700 and received by the remote media player 400. More specifically, it detects the content receiving state in the remote media player 400, the display state on the display device 310 and the detection state of a user in front of the display device 310. The audience information creating unit 412 generates the audience information in accordance with the state information the state detecting unit 411 detects, and stores it in the audience information log 414. The audience information transmitting unit 413 transmits the audience information stored in the audience information log 414 to the audience information aggregating server 700 of the service provider in accordance with the report pattern setting in the collection/report pattern setting. In addition, a configuration is also possible in which the receiving terminal 100 sets the collection/report pattern in place of the audience information aggregating server 700, and the audience information transmitting unit 413 transmits the audience information stored in the audience information log 414 to the receiving terminal 100.

The content receiving unit 420 receives a content which is provided from the receiving terminal 100 at a distant place such as a different room within a house or from the remote media server 500. In addition, it receives content for broadcast viewing or VOD viewing from the content server 600 via the IP network 800. The content information detecting unit 430 acquires metadata about the content the content receiving unit 420 receives . The metadata about the content includes detailed information about the content such as its title and resolution. In addition, since the broadcast viewing and VOD viewing are different viewing services, the metadata differ from each other. For example, as the metadata peculiar to the broadcasting service, the broadcasting time and broadcasting date are contained. As for the content received from the receiving terminal 100, it includes the metadata about the recording such as the recording date and time and image quality.

The state detecting unit 411 detects whether the content is being received or not by referring to the receiving state of the content receiving unit 420, and detects, during receiving the content, the distribution mode of the contents, that is, whether the remote media player 400 is receiving a content on air or a storage content from the receiving terminal 100, or receiving a storage content from the remote media server 500, or receiving a content on air or VOD content from the content server 600. Furthermore, when the remote media player 400 is receiving the content on air, storage content or VOD content, the state detecting unit 411 acquires the metadata about the content from the information the content information detecting unit 430 detects.

The display state detecting unit 440 refers to the state of the HDMI interface, and detects the transmission state of the video signal to the display device 310. Confirming the display state of the display device 310 enables creating accurate audience information. For example, a necessary requirement for confirming a local viewing of an ordinary broadcast is to transmit the content the content receiving unit 420 is receiving from receiving terminal 100 or content server 600 to the display device 310. This is because a case, in which, although the broadcast is being received, a user does not view occurs ordinarily, and because of preventing erroneous audience information from being formed. More specifically, the display state detecting unit 440 is configured in such a manner as to confirm the display state of the display device 310 and to create the audience information only when the display is being carried out, to prevent the erroneous audience information that the user is viewing the broadcast from being created when the power of the remote media player 400 is on, but the power of the display device 310 is off in a TV set or the like. The detection result in the display state detecting unit 440 is transmitted to the state detecting 411.

The media server unit 450 supports a content recording function and a content providing function.

First, as the content recording function, the media server unit 450 stores the content the content receivingunit 420 receives and the metadata about the content in the content storage unit 460, and enables playback by the display device 310. At the same time, it collects the audience information about the recording of the content, and transmits it to the state detecting unit 411.

Next, as the content providing function, the media server unit 450 provides a recorded content stored in the content storage unit 460 to the remote media player 400. More specifically, the remote media player 400 selects a recorded content to be played back and requests the media server unit 450. Receiving the request, the media server unit 450 provides the recorded content selected to the remote media player 400. The processing is internally executed between the content receiving unit 420 and the media server unit 450. The media server unit 450 collects the audience information about the content playback and transmits it to the state detecting unit 411.

Next, details of the audience information aggregating server 700 will be described.

The audience information aggregating server 700 comprises the audience information structure setting unit 701, the pattern storage unit 702, the audience information receiving unit 703 and the aggregated audience information storage unit 704.

The audience information structure setting unit 701 sets a collection pattern designating the structure of the audience information the audience information creating unit 412 of the remote media player 400 generates, and a report pattern used when the audience information transmitting unit 413 transmits the audience information. The collection/report pattern the audience information structure setting unit 701 sets is stored in the pattern storage unit 702.

More specifically, the audience information structure setting unit 701 customizes the collection pattern of the audience information to suit the remote media player 400 of each user in accordance with the audience information collection permission a subscriber determines at a service contract or at a service subscription/change, and stores the customized collection pattern in the pattern storage unit 702. In addition, the audience information structure setting unit 701 sets the timing of receiving a report of the audience information from the remote media player 400, and stores it in the pattern storage unit 702. As for the timing of the report, it is possible to set it at a fixed period, at a random period, at an instant or on demand. In addition, when a change of the collection pattern or report timing occurs, the audience information structure setting unit 701 transmits information for setting the collection/report pattern again to the appropriate remote media player 400.

The audience information receiving unit 703 receives the audience information items collected by each remote media player 400, and aggregates and manages them. The audience information items aggregated by the audience information receiving unit 703 are stored in the aggregated audience information storage unit 704. The audience information items stored are used for improving the service provision in the service provider, or provided to a third party such as a content provider.

Next, the operation of the audience information collecting system of the embodiment 2 will be described.

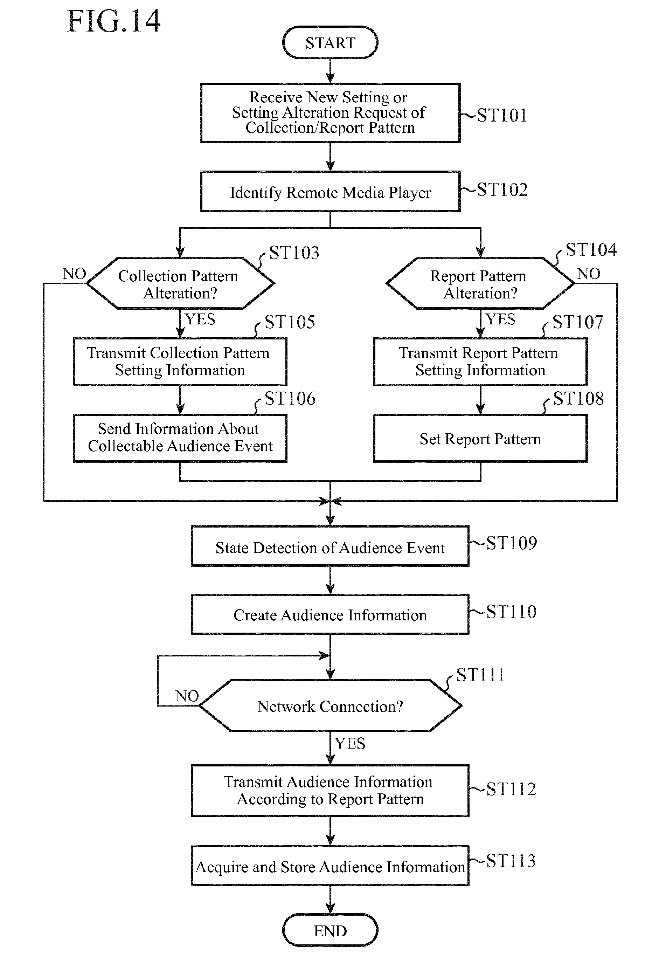

FIG. 14 is a flowchart showing the operation of the audience information aggregating server and remote media player of the audience information collecting system of the embodiment 2.

As for a collection pattern of the audience information that is selected by a subscriber via an operation input unit (not shown) or the like of the remote media player 400, or as for a report pattern that is managed by the service provider via an operation input unit (not shown) of the audience information aggregating server 700, if the audience information structure setting unit 701 receives a new setting or setting alteration request for them (step ST101), it identifies the remote media player 400 that receives the request for the collection pattern and the media player which is the target of the report pattern alteration (step ST102). Furthermore, the audience information structure setting unit 701, referring to the collection/report pattern of the appropriate remote media player 400, which is stored in the pattern storage unit 702, decides on whether the request received at step ST101 asks an alteration of the collection pattern (step ST103), and likewise decides on whether it asks an alteration of the report pattern (step ST104).

When it asks the alteration of the collection pattern (YES at step ST103), the audience information structure setting unit 701 transmits collection pattern setting information for setting a new collection pattern to the audience information creating unit 412 of the remote media player 400 (step ST105). The audience information creating unit 412, referring to the collection pattern setting information transmitted at step ST105, notifies the state detecting unit 411 of information about a collectable audience event permitted by the subscriber (step ST106). On the other hand, unless it asks the alteration of the collection pattern (NO at step ST103), the processing proceeds to step ST109.

In addition, when the request asks the alteration of the report pattern (YES at step ST104), the audience information structure setting unit 701 transmits report pattern setting information for setting a new report pattern to the audience information transmitting unit 413 of the remote media player 400 (step ST107). The audience information transmitting unit 413 sets the report pattern transmitted at step ST107 (step ST108). On the other hand, unless it asks the alteration of the report pattern (NO at step ST104), the processing proceeds to step ST109.

The state detecting unit 411 carries out the state detection of a collectable audience event, and transmits the result to the audience information creating unit 412 (step ST109). The audience information creating unit 412 generates the audience information in accordance with the state detection information transmitted at step ST109, and stores it in the audience information log 414 (step ST110). The audience information transmitting unit 413 decides on whether it is connected to the IP network 800 or not (step ST111). Unless it is connected (NO at step ST111), it returns to the decision processing at step ST111 and waits until the connection is detected. On the other hand, when it is connected to the IP network 800 (YES at step ST111), the audience information transmitting unit 413, when transmission timing of the audience information comes by referring to the report pattern stored, reads the audience information stored in the audience information log 414 and transmits it to the audience information aggregating server 700 (step ST112). The audience information receiving unit 703 of the audience information aggregating server 700 acquires and aggregates the audience information transmitted at step ST112, stores it in the aggregated audience information storage unit 704 (step ST113), and terminates the processing.

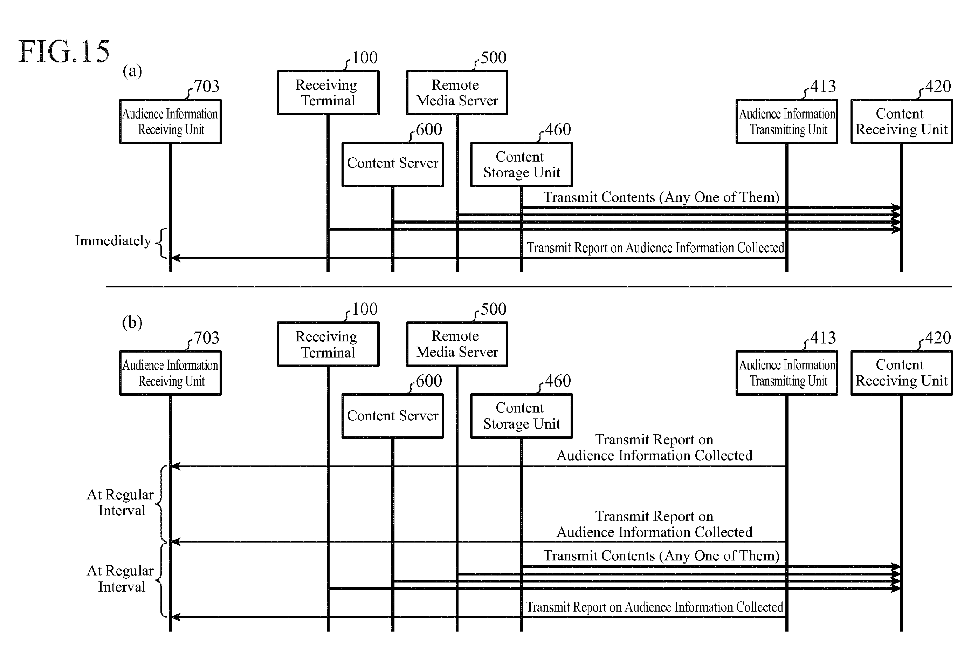

FIG. 15 is a diagram illustrating the report pattern of the processing at step ST112 of the flowchart of FIG. 14 described above.

FIG. 15(a) is a diagram showing a case where the report pattern is set at "instant". In this case, one of the content server 600, receiving terminal 100, remote media server 500 and content storage unit 460 transmits a content, and immediately after the content receiving unit 420 receives the content, the audience information transmitting unit 413 transmits the audience information to the audience information receiving unit 703. FIG. 15(b) is a diagram showing a case where the report pattern is set at "fixed intervals". In this case, regardless of the content transmission state from any one of the content server 600, receiving terminal 100, remote media server 500 and content storage unit 460, the audience information transmitting unit 413 transmits the audience information at fixed intervals.

Incidentally, in the diagram of FIG. 15, a content request made from the content receiving unit 420 to one the content server 600, receiving terminal 100, remote media server 500 and content storage unit 460 is omitted. In addition, it is assumed in the diagram of FIG. 15 that the remote media player 400 is connected to the IP network 800.

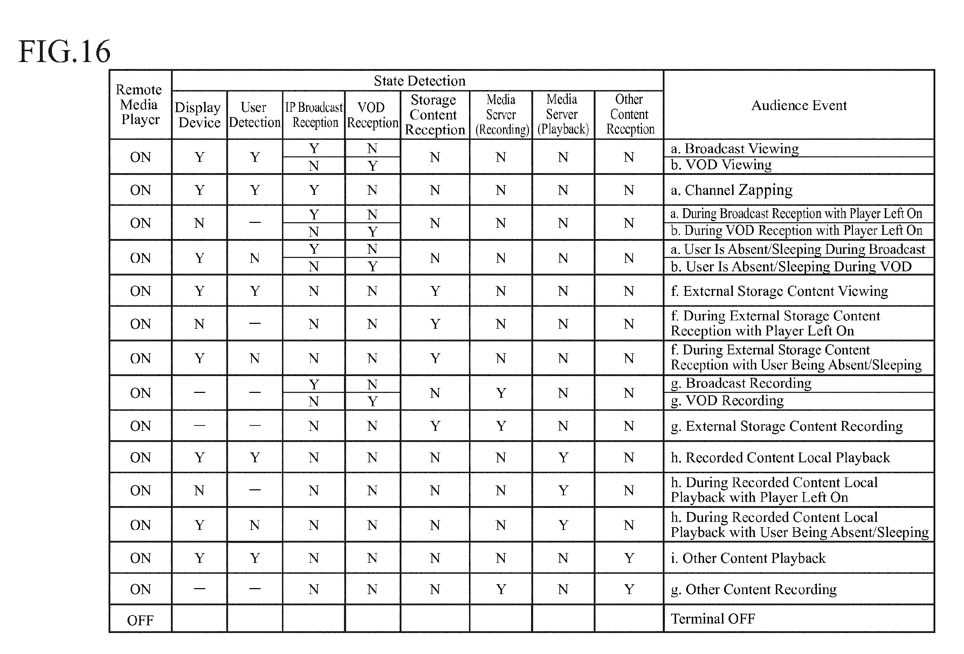

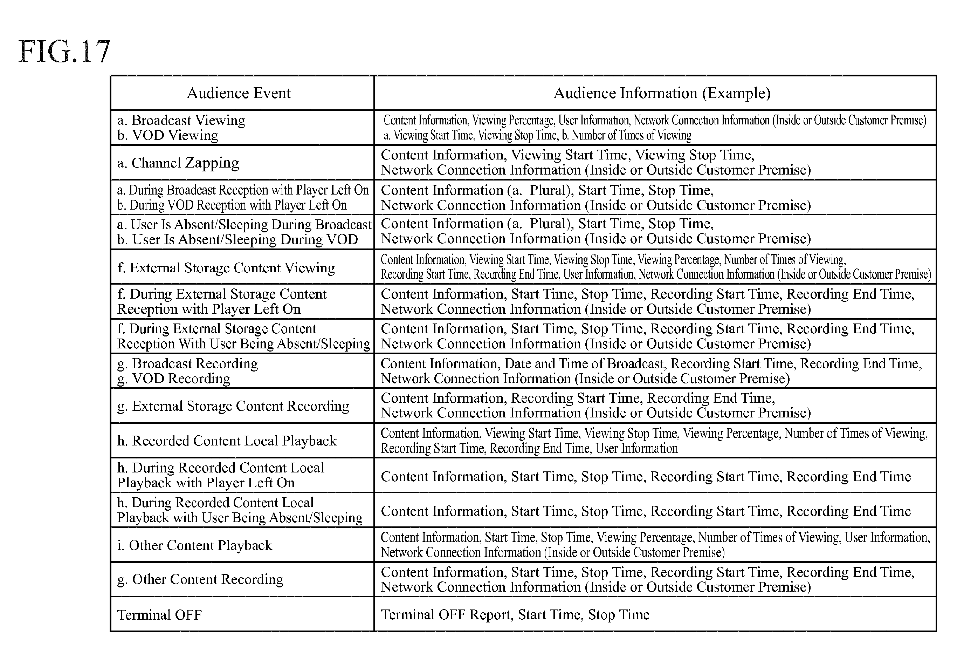

Next, the operation of the state detection of the remote media player 400 will be described. First, an audience event necessary for the state detection will be described. FIG. 16 and FIG. 17 are tables illustrating audience events and the audience information items corresponding to the audience events of the remote media player 400 of the audience information collecting system of the embodiment 2.

FIG. 16 is a table showing an example of the audience events obtained by the analysis of the state detection information items of the state detecting unit 411.

The state detecting unit 411 identifies the audience events in accordance with the state detection information items about the display device 310, user detecting device 210, content receiving unit 420, and media server unit 450.

First, as for the state detection information and audience events, which are detected in the case of a broadcast viewing or VOD viewing supplied from the content server 600 via the IP network 800 or in the case of a real-time viewing of a broadcast or VOD the receiving terminal 100 receives from the content server 600 via the IP network 800, they are the same as the "a. broadcast viewing", "a. channel surfing", "a. during broadcast reception with receiving terminal being left on", "a. user is absent/sleeping during broadcast", and "b. VOD viewing", "b. during VOD reception with receiving terminal being left on", "b. user is absent/sleeping during VOD" as shown in FIG. 5 of the embodiment 1, and the state detection information items corresponding to the audience events are the same as those of the embodiment 1. Thus, FIG. 16 shows a. and b. collectively and their description will be omitted. Incidentally, in the embodiment 2, since the content receiving unit 420 carries out "storage content reception" and "other content reception" in addition to the "IP broadcast reception" and "VOD reception", columns of the "storage content reception" and "other content reception" are added to the state detection of FIG. 16. However, when viewing a broadcast or VOD in real time, the "storage content reception" and "other content reception" are all in the nonoperational state as indicated by "N". The "other contents" include real-time interactive or download type contents and applications such as music, e-books, E-news, weather, photographs, games, etc. which are not contained in the "IP broadcast" or "VOD" centering on TV programs or movies, or in the "storage content" that stores them.

Next, an audience event of viewing a content stored in the receiving terminal 100 or remote media server 500, which is a characteristic configuration of the embodiment 2, will be described in detail. To identify the "external storage content viewing", it is indispensable as shown in FIG. 16 that the "display device", "user detection" and "storage content reception" are in the normal operational state as indicated by "Y", and that the "IP broadcast reception", "VOD reception", "media server (recording, playback)" and "other content reception" are in the nonoperational state as indicated by "N". When these conditions are satisfied, the audience event can be identified as the "external storage content viewing" at a high probability.

To identify the audience event "during external storage content reception with player being left on", it is necessary as shown in FIG. 16 that only the "storage content reception" is in the normal operational state as indicated by "Y", and that the "display device", "IP broadcast reception", "VOD reception", "media server (recording, playback)" and "other content reception" are in the off state as indicated by "N". Incidentally, since the display device 310 is in the off state, the presence or absence of the user detection has nothing to do. The event "during external storage content reception with player being left on" often occurs when using an external terminal such as the remote media player 400.

As for the audience event "during external storage content reception with user being absent/sleeping", it is necessary that the "display device" and "storage content reception" are in the normal operational state as indicated by "Y", and the "user detection", "IP broadcast reception", "VOD reception", "media server (recording, playback)" and "other content reception" are in the nonoperational state as indicated by "N".

To identify the audience event "broadcast/VOD recording", it is essential as shown in FIG. 16 that the "IP broadcast reception" for the broadcast recording or the "VOD reception" for the VOD recording and the "media server (recording)" are in the normal operational state as indicated by "Y", and that the "VOD reception" for the broadcast recording or the "IP broadcast reception" for the VOD recording, and the "storage content reception", "media server (playback) "and "other content reception" are in the nonoperational state as indicated by "N". Incidentally, although the "broadcast/VOD recording" can be identified regardless of the presence or absence of the "display device" and "user detection", when the "display device" and "user detection" are in the normal operational state as indicated by "Y", for example, both the "broadcast/VOD viewing" and the "broadcast/VOD recording" can be identified, and when the "display device" and "user detection" are in the off state as indicated by "N", it can be identified that only the "broadcast/VOD recording" is carried out without the "broadcast/VOD viewing" being executed.

To identify the audience event "external storage content recording", it is essential as shown in FIG. 16 that the "storage content reception" and "media server (recording)" are in the normal operational state as indicated by "Y", and that the "IP broadcast reception","VOD reception","media server (playback)" and "other content reception" are in the nonoperational state as indicated by "N". Incidentally, although the "external storage content recording" can be identified regardless of the presence or absence of the "display device" and "user detection", when the "display device" and "user detection" are in the normal operational state as indicated by "Y", for example, both the "external storage content viewing" and "external storage content recording" can be identified, and when the "display device" and "user detection" are in the off state as indicated by "N", it can be identified that only the "external storage content recording" is carried out without the "external storage content viewing" being executed.

To identify the audience event "recorded content local playback" that executes the local playback function of the media server unit 450, it is necessary as shown in FIG. 16 that the "display device", "user detection" and "media server (playback,)" are in the operational state as indicated by "Y", and that the "IP broadcast reception", "VOD reception", "storage content reception", "media server (recording)", and "other content reception" are in the nonoperational state as indicated by "N".

To identify the audience event "during recorded content local playback with player being left on", it is necessary as shown in FIG. 16 that only the "media server (playback)" is in the normal operational state as indicated by "Y", and that the "display device", "IP broadcast reception", "VOD reception", "storage content reception", "media server (recording)" and "other content reception" are in the off state as indicated by "N". Incidentally, since the display device 310 is in the off state, the presence or absence of the user detection has nothing to do.

To identify the audience event "during recorded content local playback with user being absent/sleeping", it is necessary as shown in FIG. 16 that the "display device" and "media server (playback)" are in the normal operational state as indicated by "Y", and that the "user detection", "IP broadcast reception", "VOD reception", "storage content reception", "media server (recording)" and "other content reception" are in the nonoperational state as indicated by "N".

To identify the audience event "other content playback", it is necessary as shown in FIG. 16 that the "display device", "user detection" and "other content reception" are in the normal operational state as indicated by "Y", and that the "IP broadcast reception","VOD reception","storage content reception", "media server (recording)" and "media server (playback)" are in the nonoperational state as indicated by "N".

To identify the audience event "other content recording", it is necessary as shown in FIG. 16 that the "media server (recording)" and "other content reception" are in the normal operational state as indicated by "Y", and that the "IP broadcast reception", "VOD reception", "storage content reception" and "media server (playback)" are in the nonoperational state as indicated by "N". Incidentally, the presence or absence of the "display device" and "user detection" have nothing to do.

FIG. 17 shows an example of the audience information created for the audience events shown in FIG. 16. Since the remote media player 400 of the embodiment 2 is disconnectable from the network, network connection information (inside or outside customer premise) is added and created as the audience information.

When the audience information is the "external storage content viewing", for example, the "content information", "viewing start time", "viewing stop time", "viewing percentage", "the number of times of viewing", "recording start time", "recording end time","user information", and"network connection information (inside or outside customer premise)" are created as the audience information.

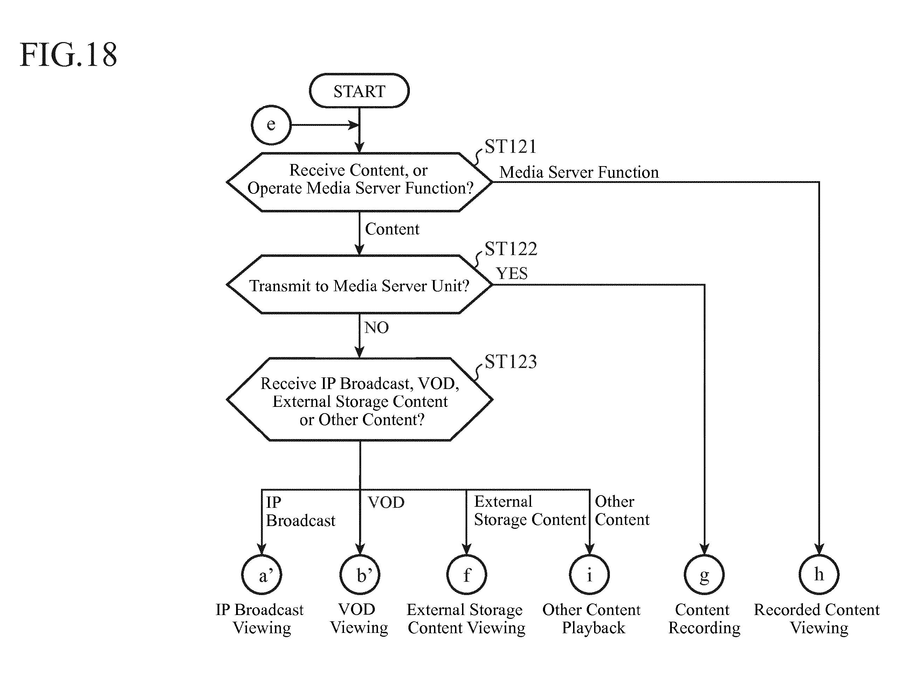

Next, the operation of the state detecting unit 411 of the remote media player 400 will be described with reference to the flowchart from FIG. 18 to FIG. 21.

First, FIG. 18 is a flowchart showing the general operation of the state detecting unit of the remote media player of the audience information collecting system of the embodiment 2.

First, the state detecting unit 411, referring to the receiving state of the content receiving unit 420 and the operational state of the media server unit 450, decides on whether the former receives a content or the latter operates a media server function (step ST121).

If the state detecting unit 411 decides at step ST121 that the content is being received, it further decides on whether the received content is transmitted to the media server unit 450 or not (step ST122). Unless the content is transmitted to the media server unit 450 (NO at step ST122), the state detecting unit 411 further decides on whether an IP broadcast is being received, or a VOD is being received, or an external storage content is being received (step ST123). If the state detecting unit 411 decides at step ST123 that an IP broadcast is being received, it decides that the IP broadcast viewing is being carried out in the remote media player 400, and proceeds to processing a'. In addition, if the state detecting unit 411 decides at step ST123 that a VOD broadcast is being received, it decides that the VOD viewing is made in the remote media player 400, and proceeds to processing b'. In addition, when the state detecting unit 411 decides at step ST123 that an external storage content is being received, it decides that the external storage content viewing is carried out, and proceeds to processing f. Inaddition, when the state detecting unit 411 decides at step ST123 that other content is being received, it further decides that the other content is being played back and proceeds to processing i.

On the other hand, if the state detecting unit 411 decides at step ST122 that the received content is transmitted to the media server unit 450 (YES step at ST122), it further decides that the media server unit 450 executes the IP broadcast recording or VOD recording of the content, or external storage content recording or other content recording, and proceeds to processing g.

In addition, if the state detecting unit 411 decides at step ST121 that the media server function is being operated, it decides that the recorded content viewing is carried out on the media server unit 450, and proceeds to processing h.

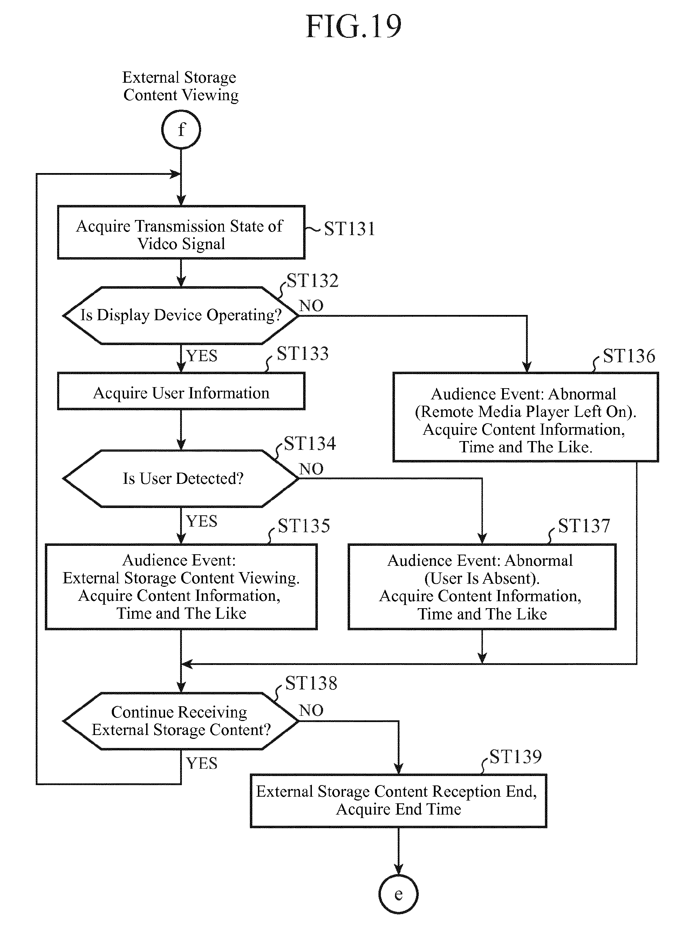

Next, details of the processing a' to processing g will be described with reference to FIG. 19 to FIG. 21.

Incidentally, as for the processing a' and processing b', since they are the same as the flowcharts shown in FIG. 8 and FIG. 9 of the embodiment 1 except that the processing subject changes from the receiving terminal 100 to the remote media player 400, their description is omitted from the flowcharts. In the processing a' and processing b', the state detecting unit 411 of the remote media player 400 executes the state detection for detecting an audience event occurring in the IP broadcast viewing or in the VOD viewing in accordance with the operational states of the display device 310 and user detecting device 210, and carries out information collection of the content information, time and the like.

Next, referring to the flowchart of FIG. 19, details of the processing f will be described. In the processing f, the state detecting unit 411 executes the state detection for detecting the audience events occurring in the external storage content viewing, and carries out information collection of the content information, time and the like.

The state detecting unit 411 acquires the transmission state of the video signal from the display state detecting unit 440 to the display device 310 (step ST131), and decides on whether the display device 310 is in the operational state or not by referring to the transmission state of the video signal acquired (step ST132). When the display device 310 is in the operational state (YES at step ST132), the state detecting unit 411 further acquires user information about a user in front of the display device 310 from the user detecting device 210 (step ST133), and decides on whether the user is sitting in front of the display device 310 or not by referring to the user information acquired (step ST134). When the user is sitting in front of the display device 310 (YES at step ST134), the state detecting unit 411 detects that the audience event is the external storage content viewing and acquires the content information, time and the like from the content information detecting unit 430 (step ST135).

On the other hand, unless the display device 310 is in the operational state (NO at step ST132), the state detecting unit 411 detects that the audience mode is abnormal (remote media player is left on), and acquires the viewing content information, time and the like by referring to the information about the content acquired from the content information detecting unit 430 (step ST136). In addition, unless the user is sitting in front of the display device 310 (NO at step ST134), the state detecting unit 411 detects that the audience mode is abnormal (user is absent), and acquires the content information, time and the like from the content information detecting unit 430 (step ST137).

After that, the state detecting unit 411 decides on whether the remote media player 400 continues to receive the external storage content or not (step ST138). When the remote media player 400 continues to receive the external storage content (YES at step ST138), the state detectingunit 411 returns to the processing at step ST131 to repeat the foregoing processing. On the other hand, unless the remote media player 400 continues to receive the external storage content (NO at step ST138), the state detecting unit 411 detects the external storage content reception completion and acquires reception completion time (step ST139). After that, the flow returns to the processing at step ST121 of FIG. 18 to repeat the foregoing processing.

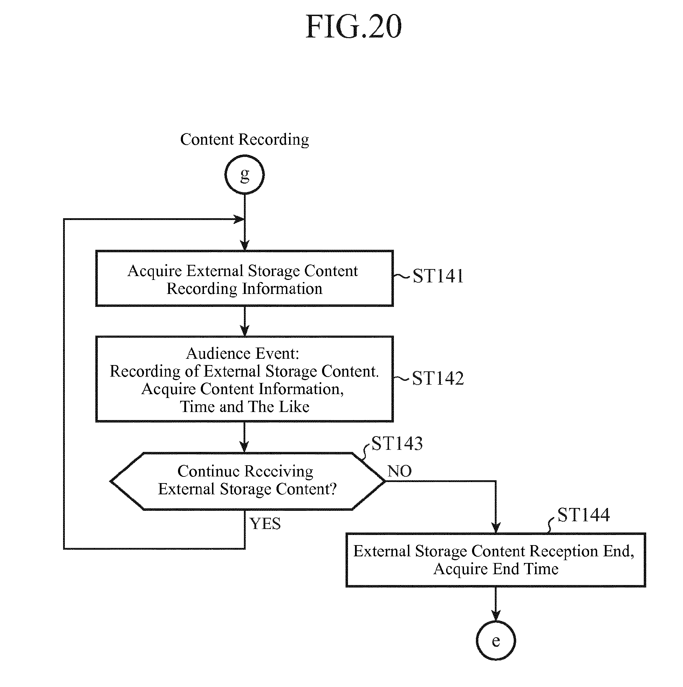

Next, referring to the flowchart of FIG. 20, details of the processing g will be described. In the processing g, the state detecting unit 411 executes the state detection for detecting the audience events occurring in the IP broadcast recording, VOD recording, external storage content recording or other content recording, and carries out information collection of the content information, time and the like. Incidentally, since the same processing is executed in the case of doing any one of the IP broadcast recording, VOD recording, other content recording and external storage content recording, the following description will be made by way of example of the external storage content recording.

When the state detecting unit 411 acquires information about the recording of an external storage content from the media server unit 450 (step ST141), the state detecting unit 411 detects that the audience event is recording of the external storage content, and acquires the content information, time and the like from the content information detecting unit 430 (step ST142). After that, the state detecting unit 411 decides on whether the remote media player 400 continues to receive the external storage content (step ST143). When it continues to receive the external storage content (YES at step ST143), it returns to the processing at step ST141 to repeat the foregoing processing. On the other hand, unless it continues to receive the external storage content (NO at step ST143), it detects the reception end of the external storage content and acquires the reception end time (step ST144) . After that, the flow returns to the processing at step ST121 of FIG. 18 to repeat the foregoing processing.

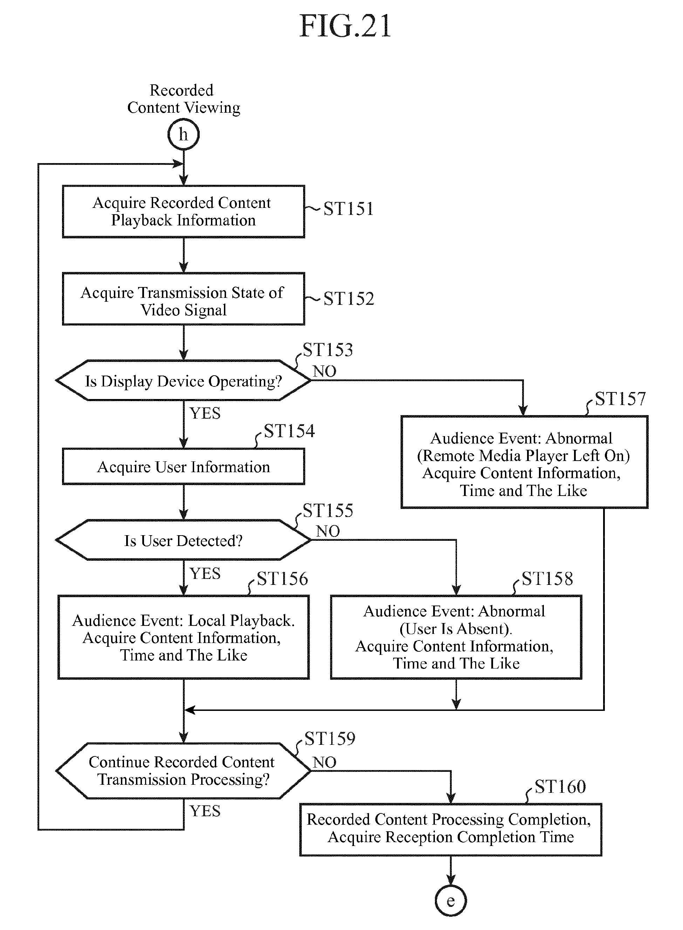

Next, referring to the flowchart of FIG. 21, details of the processing h will be described. In the processing h, the state detecting unit 411 executes the state detection for detecting the audience events occurring in the recorded content viewing, and carries out information collection of the content information, time and the like.

When the state detecting unit 411 acquires information about the content playback from the media server unit 450 (step ST151), it further acquires the transmission state of the video signal from the display state detecting unit 440 to the display device 310 (step ST152), and decides on whether the display device 310 is in the operational state or not by referring to the transmission state of the video signal acquired (step ST153). When the display device 310 is in the operational state (YES at step ST153), the state detecting unit 411 further acquires user information about a user in front of the display device 310 from the user detecting device 210 (step ST154), and decides on whether the user is sitting in front of the display device 310 or not by referring to the user information acquired (step ST155). When the user is sitting in front of the display device 310 (YES at step ST155), the state detecting unit 411 detects that the audience event is the local playback of the recorded content, acquires the content information, time and the like from the content information detecting unit 430 (step ST156), and proceeds to the processing at step ST159.

On the other hand, unless the display device 310 is in the operational state (NO at step ST153), the state detecting unit 411 detects that the audience mode is abnormal (remote media player is left on), acquires the viewing content information, time and the like from the content information detecting unit 430 (step ST157), and proceeds to the processing at step ST159.

In addition, unless the user is sitting in front of the display device 310 (NO at step ST155), the state detecting unit 411 detects that the audience mode is abnormal (user is absent), acquires the content information, time and the like from the content information detecting unit 430 (step ST158), and proceeds to the processing at step ST159.

After that, the state detecting unit 411 decides on whether the media server unit 450 continues to transmit the recorded content (step ST159) or not. When the media server unit 450 continues to transmit the recorded content (YES at step ST159), the state detecting unit 411 returns to the processing at step ST151 to repeat the foregoing processing. On the other hand, unless the media server unit 450 continues to transmit the recorded content (NO at step ST159), the state detecting unit 411 detects the recorded content processing completion and acquires the processing completion time (step ST160). After that, the flow returns to the processing at step ST121 of FIG. 18 to repeat the foregoing processing.

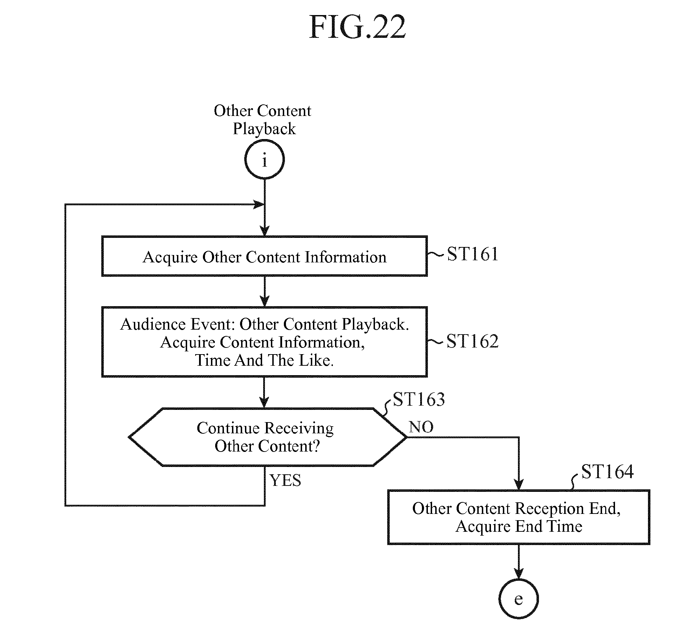

Next, referring to the flowchart of FIG. 22, details of the processing i will be described. In the processing i, the state detecting unit 411 executes the state detection for detecting the audience events occurring in the playback of the other content, and carries out information collection of the content information, time and the like.

The state detecting unit 411 acquires the information about the other content playback from the content receiving unit 420 (step ST161), and acquires the content information, time and the like from the content information detecting unit 430 (step ST162). After that, the state detecting unit 411 decides on whether the remote media player 400 continues to receive the other content (step ST163). When the remote media player 400 continues to receive the other content (YES at step ST163), the state detecting unit 411 returns to the processing at step ST161 to repeat the foregoing processing. On the other hand, unless the remote media player 400 continues to receive the other content (NO at step ST163), the state detecting unit 411 detects the other content reception completion, and acquires the reception completion time (step ST164). After that, the flow returns to the processing at step ST121 of FIG. 18 to repeat the foregoing processing.

As described above, according to the present embodiment 2, it is configured in such a manner as to comprise the state detecting unit 411 for detecting the state of the remote media player 400 by acquiring and analyzing the information about the user detection by the user detecting device 210, the information about the display state on the display device 310 from the display state detecting unit 440, and the information about the content processing state from the media server unit 450; and the audience information creating unit 412 for generating the audience information in accordance with the state of the remote media player 400 the state detecting unit 411 detects. Accordingly, it can create the accurate and meaningful audience information in the remote media player 400. Thus it can appropriately provide the information useful for the aggregation of the audience information on the service provider side (audience information aggregating server 700).

In addition, according to the present embodiment 2, it is configured in such a manner that even when the media player 400, which is capable of disconnecting the IP network, plays back a content after taking it out and being disconnected from the network, it reports, when the connection with the network is restored, the audience information it collects to the service provider side (audience information aggregating server 700). Accordingly, even when it breaks the network connection and enables a user to view the content stored in the remote media player 400, it can create accurate audience information and provide it to the service provider side.

Incidentally, it is to be understood that a free combination of the individual embodiments, variations of any components of the individual embodiments or removal of any components of the individual embodiments are possible within the scope of the present invention.

### INDUSTRIAL APPLICABILITY

A receiving terminal, an audience information collecting system and an audience information collecting method in accordance with the present invention comprise the state detecting unit for detecting the state of the receiving terminal by acquiring and analyzing the information about the user detection by the user detecting device, the information about the display state on the display device from the display state detecting unit, and the information about the content processing state from the media server unit; and the audience information creating unit for generating the audience information in accordance with the state of the receiving terminal the state detecting unit detects. Accordingly, it can create accurate and meaningful audience information and can appropriately provide the information useful for the aggregation of the audience information to the service provider side (audience information aggregating server). Thus, they are applicable to an audience information collecting system and audience information collecting method for collecting the audience information about a viewer of content distribution service.

### DESCRIPTION OF REFERENCE SYMBOLS

100 receiving terminal; 110, 410 audience information measuring unit; 111, 411 state detecting unit; 112, 412 audience information creating unit; 113, 413 audience information transmitting unit; 114, 414 audience information log; 120, 420 content receiving unit; 130, 430 content information detecting unit; 140, 440 display state detecting unit; 150, 150', 450 media server unit; 160, 460 content storage unit; 200, 210 user detecting device; 300, 310 display device; 400 remote media player; 500 remote media server; 600 content server; 700 audience information aggregating server; 701 audience information structure setting unit; 702 pattern storage unit; 703 audience information receiving unit; 704 aggregated audience information storage unit; 800 IP network.

## Claims

1. A receiving terminal for receiving a content distributed and for supplying the received content to a display device, the receiving terminal comprising:
a content receiving unit for receiving the content;
a display state detecting unit for detecting a display state indicating whether the content the content receiving unit receives is displayed on the display device or not;
a state detecting unit for identifying an audience event indicating an audience mode of the content by analyzing a distribution mode of the content the content receiving unit receives and the display state of the content the display state detecting unit detects;
an audience information creating unit for generating audience information corresponding to the audience event the state detecting unit identifies; and
an audience information transmitting unit for outputting the audience information the audience information creating unit generates.

2. The receiving terminal according to claim 1, further comprising:
a user detecting device for detecting, when the display state detecting unit detects that the content is displayed on the display device, whether a user who is viewing the content displayed on the display device is present or not, wherein
the state detecting unit identifies the audience event by analyzing user detection information of the user detecting device.

3. The receiving terminal according to claim 1, further comprising:
a content storage unit for storing the content the content receiving unit receives as a recorded content; and
a media server unit for carrying out recording control of the content the content receiving unit receives into the content storage unit, playback control of a recorded content stored in the content storage unit, or copy or move control of a recorded content stored in the content storage unit, wherein
the state detecting unit identifies the audience event by analyzing recording control information, playback control information or copy/move control information of the media server unit.

4. The receiving terminal according to claim 3, wherein
the media server unit carries out remote playback control for controlling remote playback of the content the content receiving unit receives; and
the state detecting unit identifies the audience event by analyzing remote playback control information of the media server unit.

5. An audience information collecting system including a receiving terminal for receiving a content distributed and for generating audience information about the content received, a display device for displaying the content the receiving terminal receives, and a server for collecting and aggregating the audience information the receiving terminal generates, wherein
the receiving terminal comprises:
a content receiving unit for receiving the content;
a display state detecting unit for detecting a display state indicating whether the content the content receiving unit receives is displayed on the display device or not;
a state detecting unit for identifying an audience event indicating an audience mode of the content by analyzing a distribution mode of the content the content receiving unit receives and a display state of the content the display state detecting unit detects;
an audience information creating unit for generating audience information corresponding to the audience event the state detecting unit identifies; and
an audience information transmitting unit for outputting the audience information the audience information creating unit generates, and wherein
the server comprises:
an audience information structure deciding unit for designating a structure of the audience information to be formed by the audience information creating unit; and
an audience information receiving unit for designating transmitting timing of the audience information of the audience information transmitting unit, for receiving the audience information transmitted at the designated timing, and for aggregating and storing the audience information received.

6. The audience information collecting system according to claim 5, wherein
the receiving terminal comprises a user detecting device for detecting, when the display state detecting unit detects that the content is displayed on the display device, whether a user who is viewing the content displayed on the display device is present or not; and
the state detecting unit identifies an audience event indicating an audience mode of the content by analyzing user detection information of the user detecting device.

7. The audience information collecting system according to claim 5, wherein
the receiving terminal comprises a content storage unit for storing the content the content receiving unit receives as a recorded content; and a media server unit for carrying out recording control of the content the content receiving unit receives into the content storage unit, playback control of a recorded content stored in the content storage unit, or copy or move control of a recorded content stored in the content storage unit, and wherein
the state detecting unit identifies the audience event by analyzing recording control information, playback control information or copy/move control information of the media server unit.

8. The audience information collecting system according to claim 7, wherein
the media server unit carries out remote playback control for controlling remote playback of the content the content receiving unit receives; and
the state detecting unit identifies the audience event by analyzing remote playback control information of the media server unit.

9. An audience information collecting method in which a receiving terminal receives a content distributed and generates audience information about the content received, the audience information collecting method comprising:
a step of receiving, by a content receiving unit, a content distributed;
a step of detecting, by a display state detecting unit, a display state indicating whether the content is displayed or not;
a step of identifying, by a state detecting unit, an audience event indicating an audience mode of the content by analyzing a distribution mode of the content and a display state of the content;
a step of generating, by an audience information creating unit, audience information corresponding to the audience event identified; and
a step of outputting, by an audience information transmitting unit, the audience information formed.

10. An audience information collecting method by which a receiving terminal receives a content distributed and generates audience information about the content received, and by which a server collects and aggregates the audience information, wherein the audience information collecting method comprises in the receiving terminal:
a step of receiving, by a content receiving unit, a content distributed;
a step of detecting, by a display state detecting unit, a display state indicating whether the content is displayed or not;
a step of identifying, by a state detecting unit, an audience event indicating an audience mode of the content by analyzing a distribution mode of the content and a display state of the content;
step of generating, by an audience information creating unit, audience information corresponding to the audience event identified; and
a step of outputting, by an audience information transmitting unit, the audience information formed, and wherein the audience information collecting method comprises in the server:
a step of designating, by an audience information structure deciding unit, a structure of the audience information to be formed;
a step of designating, by an audience information receiving unit, transmission timing of the audience information formed;
a step of receiving, by the audience information receiving unit, the audience information transmitted at the timing designated; and
a step of aggregating and storing, by the audience information receiving unit, the audience information received.

11. The audience information collecting method according to claim 9, further comprising:
a step of detecting, by a user detecting device, whether a user who is viewing the content displayed is present or not when detected that the content is displayed; and
a step of identifying, by the state detecting unit, the audience event by analyzing user detection information of the user detecting device.

12. The audience information collecting method according to claim 10, further comprising:
a step of detecting, by a user detecting device, whether a user who is viewing the content displayed is present or not when detected that the content is displayed; and
a step of identifying, by the state detecting unit, the audience event by analyzing user detection information of the user detecting device.

13. The audience information collecting method according to claim 9, further comprising:
a step of storing, by a content storage unit, the content as a recorded content; and
a step of carrying out, by a media server unit, recording control of the content into the content storage unit, or playback control of the recorded content, or copy or move control of the recorded content; and
a step of identifying, by the state detecting unit, the audience event by analyzing recording control information, or playback control information or copy/move control information of the media server unit.

14. The audience information collecting method according to claim 10, further comprising:
a step of storing, by a content storage unit, the content as a recorded content; and
a step of carrying out, by a media server unit, recording control of the content into the content storage unit, or playback control of the recorded content, or copy or move control of the recorded content; and
a step of identifying, by the state detecting unit, the audience event by analyzing recording control information, or playback control information or copy/move control information of the media server unit.
